# EUROPEAN PATENT SPECIFICATION

(11) **EP 4 180 906 B1**
(45) Date of publication and mention of the grant of the patent: **11.02.2026**
(21) Application number: 21900789.5
(22) Date of filing: 07.10.2021
(51) Int. Cl.: G06F 1/16, G09F 9/30, H04M 1/02

(54) **ELECTRONIC DEVICE COMPRISING PROTECTIVE MEMBER**
ELEKTRONISCHE VORRICHTUNG MIT SCHUTZELEMENT
DISPOSITIF ÉLECTRONIQUE COMPRENANT UN ÉLÉMENT DE PROTECTION

(30) Priority: 04.12.2020 KR 20200168028; 23.04.2021 KR 20210052937
(43) Date of publication of application: 17.05.2023
(73) Proprietor: Samsung Electronics Co., Ltd., Suwon-si, Gyeonggi-do 16677 (KR)
(72) Inventor: LEE, Geuna, Suwon-si, Gyeonggi-do 16677 (KR); JUNG, Minsu, Suwon-si, Gyeonggi-do 16677 (KR); CHUNG, Soonwan, Suwon-si, Gyeonggi-do 16677 (KR); YOON, Byounguk, Suwon-si, Gyeonggi-do 16677 (KR)
(74) Representative: HGF
(86) International application number: PCT/KR2021/013787
(87) International publication number: WO 2022/119101

(56) References cited:
- EP-A1- 3 745 689
- WO-A1-2020/044171
- WO-A1-2020/171449
- WO-A1-2020/189843
- JP-A- 2005 295 070
- KR-B1- 100 488 418
- KR-Y1- 200 339 403
- US-A1- 2020 162 596

## Description

### [Technical Field]

Various embodiments of the disclosure relate to an electronic device, e.g., an electronic device with a display protection member.

### [Background Art]

As the demand for mobile communication increases, or as the degree of integration of electronic devices increases, the portability of electronic devices such as mobile communication terminals may be increased, and greater convenience may be provided in use of multimedia functions. For example, as touchscreen-integrated displays replace traditional mechanical (button-type) keypads, electronic devices may become more compact while functioning as an input device. For example, as the mechanical keypad may be omitted from the electronic device, the portability of the electronic device may be improved. As the display area may be expanded to the area which used to be occupied by the mechanical keypad, the electronic device may provide a larger screen while remaining the same size and weight as when it has the mechanical keypad.

Use of an electronic device with a larger screen may give more convenience in, e.g., web browsing or multimedia playing. A larger display may be adopted to output a larger screen. However, this way may be limited by the portability of the electronic device. According to an embodiment, a display using organic light emitting diodes may secure the portability of the electronic device while providing a larger screen. For example, a display using, or equipped with, organic light emitting diodes may implement a stable operation even if it is made quite thin, so that the display may be applied to an electronic device in a foldable, bendable or rollable form.

In implementing a foldable or rollable electronic device, it may be difficult to secure mechanical or electrical stability while enabling structures of the electronic device to move relative to one another (e.g., slide, rotate, or pivot). For example, if an electronic component contacts another structure (e.g., the housing or hinge structure), such as the display, when the exterior of the electronic device transforms, it may easily be damaged. It is possible to prevent damage to the electronic component by disposing the electronic component (e.g., display) while being spaced apart from the other structure by a designated gap. However, the screen size may be relatively reduced or downsizing of the electronic device may be difficult as much as the gap for preventing damage is secured. For example, as an additional structure to conceal the gap between the other structure and the display is placed, the display screen size may be limited and, if remaining in the same screen size, the electronic device may be enlarged by as much as the additional structure is placed.

US 2020/162596 A1 relates to an electronic device including a hinge structure, a first housing structure, a second housing structure that is foldable with the first housing structure, a foldable housing, a flexible display, a first mid-plate disposed on one side of the first housing structure, a second mid-plate disposed on one side of the second housing structure, a flexible printed circuit board extending between the first mid-plate and the second mid-plate, a first sealing member that seals a first opening formed in the first mid-plate, and a second sealing member that seals a second opening formed in the second mid-plate. EP 3 745 689 A1 relates to an electronic device which includes a hinge structure corresponding to a folding region of electronic device; a first housing structure connected to the hinge structure, and including a first surface, a second surface facing away from the first surface, and a first side member surrounding a first space between the first surface and the second surface; a second housing structure connected to the hinge structure, and including a third surface, a fourth surface facing away from the third surface, and a second side member surrounding a second space between the third surface and the fourth surface, wherein the first housing structure and the second housing structure fold and unfold about the hinge structure, wherein the first surface and the third surface face a same direction in an unfolded state, and wherein the second surface and the fourth surface face opposite directions in a folded state; a display that traverses at least a portion of the first surface and at least a portion of the third surface through the folding region; a first protection cover disposed in the first housing structure on at least some of a periphery of the display; a second protection cover disposed in the second housing structure on at least some of the periphery of the display; and a protection structure that protects the periphery of the display in the folding region.

The above-described information may be provided as background for the purpose of helping understanding of the disclosure. No claim or determination is made as to whether any of the foregoing is applicable as background art in relation to the disclosure.

### [Detailed Description of the Invention]

### [Technical Problem]

Various embodiments of the disclosure aim to address the foregoing issues and/or drawbacks and provide advantages described below, providing an electronic device which may prevent damage to the display due to interference with other structures while placing it in a foldable or rollable manner.

Various embodiments of the disclosure may provide an electronic device easy to downsize while preventing damage to the foldable or rollable display.

Other aspects according to various embodiments will be suggested throughout the following detailed description and will become apparent from the description or appreciated through the suggested embodiments.

### [Technical Solution]

The invention is defined in independent claim 1. Preferred embodiments are defined in the dependent claims.

### [Advantageous Effects]

According to various embodiments of the disclosure, the protection member may be disposed on at least a portion between the display edge and the structure (e.g., inner wall of the housing) to prevent damage to the display due to contact with the structure. For example, at least in the section where the protection member is disposed, the gap between the display edge and the structure may be reduced. According to an embodiment, it is possible to downsize the electronic device as much as the reduced gap or place displays enlarged as much as the reduced gap in electronic devices having the same size. In another embodiment, as the protection member includes a cushioning protrusion, it is possible to mitigate or prevent a shock caused due to contact between structures when folded or rolled. In an embodiment, as the protection member is disposed, at least, in a curved section of the display edge while contacting a structure, such as the inner wall of the housing, it is possible to guide or set the assembly position of the display on the structure. For example, the protection member may contribute to enhancing assembly quality or assembly position of the display. Other various effects may be provided directly or indirectly in the disclosure.

### [Brief Description of Drawings]

The foregoing and other aspects, configurations, and/or advantages of various embodiments of the disclosure will be more apparent from the following detailed description taken in conjunction with the accompanying drawings.
FIG. 1 is a view illustrating an electronic device in a network environment according to various embodiments;
FIG. 2 is a view illustrating an unfolded state of an electronic device according to various embodiments of the disclosure;
FIG. 3 is an exploded perspective view illustrating an electronic device according to various embodiments of the disclosure;
FIG. 4 is a view illustrating a display of an electronic device according to various embodiments of the disclosure;
FIG. 5 is a cross-sectional view illustrating an embodiment of a portion of a display, taken along line A-A' of FIG. 4;
FIG. 6 is a cross-sectional view illustrating another embodiment of a portion of a display, taken along line A-A' of FIG. 4;
FIG. 7 is an exploded perspective view illustrating a state in which a display is assembled in an electronic device according to various embodiments of the disclosure;
FIG. 8 is a view illustrating an example of a portion of a first housing of an electronic device according to various embodiments of the disclosure;
FIG. 9 is a view illustrating an example of a portion of a second housing of an electronic device according to various embodiments of the disclosure;
FIG. 10 is a cross-sectional view illustrating a portion of a first housing, taken along line B-B' of FIG. 8;
FIG. 11 is a cross-sectional view illustrating a portion of a first housing, taken along line C-C' of FIG. 8;
FIG. 12 is a perspective view illustrating another portion of a first housing, taken along line D-D' of FIG. 8;
FIG. 13 is a cross-sectional view illustrating a portion of a second housing, taken along line E-E' of FIG. 9;
FIG. 14 is a perspective view illustrating a portion of a second housing, taken along line E-E' of FIG. 9;
FIG. 15 is an enlarged, plan view illustrating portion 'C1' of FIG. 8;
FIG. 16 is an enlarged, plan view illustrating portion 'C2' of FIG. 9;
FIG. 17 is a perspective view illustrating a portion of a first housing, taken along line F-F' of FIG. 15;
FIG. 18 is a perspective view illustrating a portion of a first housing, taken along line G-G' of FIG. 15;
FIG. 19 is an enlarged, plan view illustrating portion 'H' of FIG. 2;
FIG. 20 is a front view illustrating an electronic device according to another one of various embodiments of the disclosure;
FIG. 21 is a plan view illustrating a display of an electronic device according to another one of various embodiments of the disclosure;
FIG. 22 is a view illustrating a configuration in which a protection member is disposed on a display of an electronic device according to various embodiments of the disclosure;
FIG. 23 is an enlarged view of portion 'I' of FIG. 22, illustrating an example of a first shape portion of a protection member;
FIG. 24 is an enlarged view of portion 'I' of FIG. 22, illustrating an example of a second shape portion of a protection member;
FIG. 25 is a view illustrating an electronic device according to another one of various embodiments of the disclosure, wherein a portion of a flexible display is received in a second structure;
FIG. 26 is a view illustrating an electronic device according to another one of various embodiments of the disclosure, wherein most of a flexible display is visually exposed to the outside of a second structure;
FIG. 27 is an exploded perspective view illustrating an electronic device according to another one of various embodiments of the disclosure; and
FIG. 28 is a cross-sectional view illustrating a first structure, taken along line J-J' of FIG. 26.

Throughout the drawings, like reference numerals may be assigned to like parts, components, and/or structures.

### [Mode for Carrying out the Invention]

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

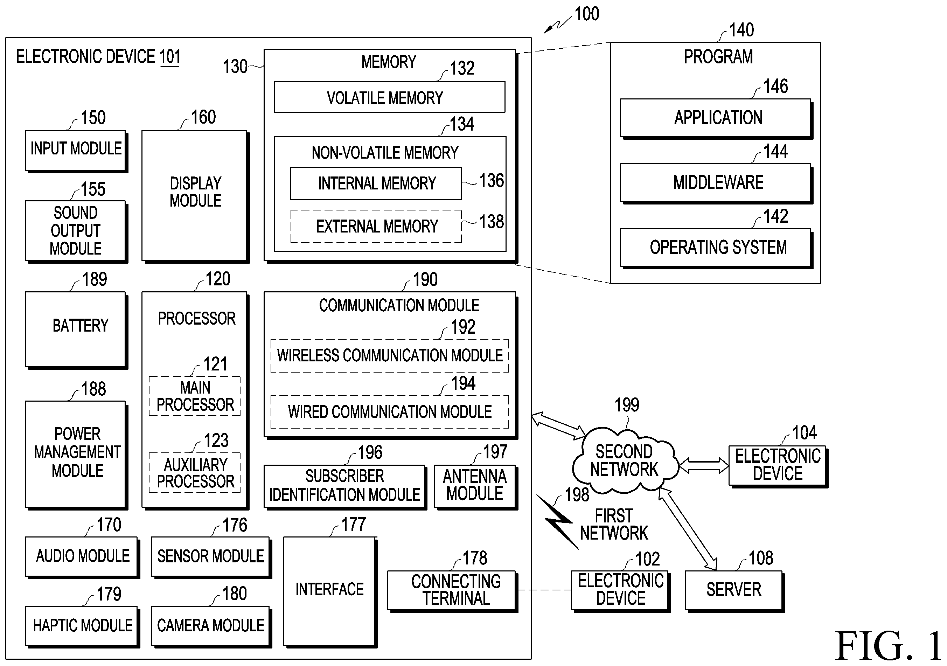

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

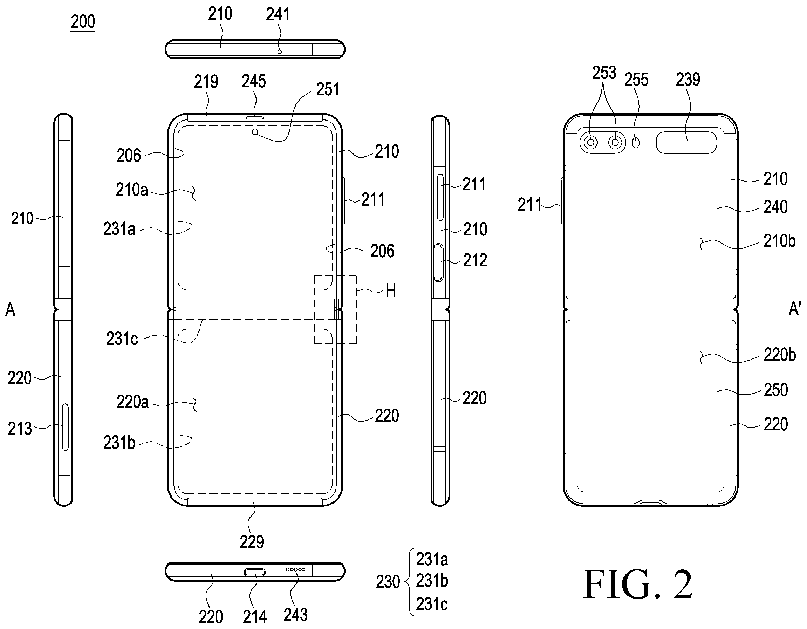

FIG. 2 is a view illustrating an unfolded state of an electronic device 200 according to various embodiments of the disclosure.

Referring to FIG. 2, according to an embodiment, an electronic device 200 may include a first housing 210, a second housing 220, and a flexible or foldable display 230 (hereinafter, simply "display 230") (e.g., the display module 160 of FIG. 1) disposed in the space provided by the first housing 210 and the second housing 220.

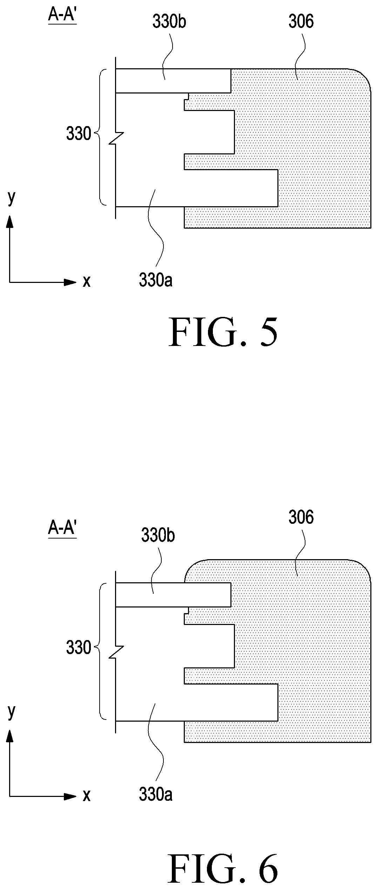

According to an embodiment, the surface on which the display 230 is disposed may be defined as a front surface of the electronic device 200. At least a portion of the front surface of the electronic device 200 may be formed by a substantially transparent front plate (e.g., a glass plate or polymer plate including various coating layers, e.g., the thin film plate 330b of FIG. 5). The opposite surface of the front surface may be defined as a rear surface of the electronic device 200. The rear surface of the electronic device 200 may be formed by a substantially opaque rear plate (hereinafter, referred to as a 'rear cover'). The rear cover may be formed of, e.g., laminated or colored glass, ceramic, polymer, metal (e.g., aluminum, stainless steel (STS), or magnesium), or a combination of at least two thereof. The surface surrounding the space between the front and rear surfaces may be defined as a side surface of the electronic device 200. The side surface may be formed by a side bezel structure (or a "side member") that couples to the front plate and the rear plate and includes a metal and/or polymer. According to an embodiment, the rear cover and the side bezel plate may be integrally formed together and include the same material (e.g., a metal, such as aluminum).

The electronic device 200 may include at least one or more of a display 230, audio modules 241, 243, and 245, a sensor module 255, a camera module 253, key input devices 211, 212, and 213, and a connector hole 214. According to an embodiment, the electronic device 200 may omit at least one (e.g., the key input devices 211, 212, and 213) of the components or additionally include another component (e.g., a light emitting device).

According to various embodiments, the display 230 may be a display at least a portion of which may be transformed into a flat or curved surface. According to an embodiment, the display 230 may include a folding area 231c, a first area 231a disposed on one side of the folding area 203 (e.g., an upper side of the folding area 231c of FIG. 2), and a second area 231b disposed on the opposite side of the folding area 231c (e.g., a lower side of the folding area 231c of FIG. 2). However, the segmentation of the display 230 as shown in FIG. 2 is merely an example, and the display 230 may be divided into a plurality of (e.g., four or more, or two) areas depending on the structure or function of the display 230. For example, in the embodiment illustrated in FIG. 2, the display 200 may be divided into the areas by the folding area 231c or folding axis A but, in another embodiment, the display 200 may be divided into the areas with respect to another folding area 231c or another folding axis (e.g., a folding axis perpendicular to the folding axis A).

According to various embodiments, the audio modules 241, 243, and 245 may include a microphone hole 241 and speaker holes 243 and 245. The microphone hole 241 may have a microphone inside to obtain external sounds. According to an embodiment, there may be a plurality of microphones to be able to detect the direction of a sound. The speaker holes 243 and 245 may include an external speaker hole 243 and a phone receiver hole 245. According to an embodiment, the speaker holes 243 and 245 and the microphone hole 241 may be implemented as a single hole, or speakers may be rested without the speaker holes 243 and 245 (e.g., piezo speakers). Various changes may be made to the position and number of microphone holes 241 and speaker holes 243 and 245 according to an embodiment.

According to various embodiments, the camera module 253 may include a first camera device 251 disposed on the first surface 210a of the first housing 210 of the electronic device 200 and a second camera device 253 disposed on the second surface 210b. The electronic device 200 may further include a flash (not shown). The camera devices 251 and 253 may include one or more lenses, an image sensor, and/or an image signal processor. The flash (not shown) may include, e.g., a light emitting diode (LED) or a xenon lamp.

According to various embodiments, the sensor modules 255 may generate an electrical signal or data value corresponding to an internal operating state or external environmental state of the electronic device 200. Although not shown in the drawings, the electronic device 200 may additionally or alternatively include a sensor module (e.g., the sensor module 176 of FIG. 1) other than the sensor module 255 provided on the second surface 210b of the first housing 210. The electronic device 200 may include, as the sensor module, at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, the key input devices 211, 212, and 213 may be disposed on a side surface of the foldable housing (e.g., the first housing 210 or the second housing 220). According to another embodiment, the electronic device 200 may exclude all or some of the above-mentioned key input devices 211, 212, and 213 and the excluded key input devices may be implemented in other forms, e.g., as soft keys, on the display 230. In an embodiment, the key input device may be configured to implement key input by a sensor module (e.g., a gesture sensor).

According to various embodiments, the connector hole 214 may be configured to receive a connector (e.g., a USB connector) for transmitting/receiving power and/or data to/from an external electronic device or, additionally or alternatively, a connector for transmitting/receiving audio signals to/from an external electronic device.

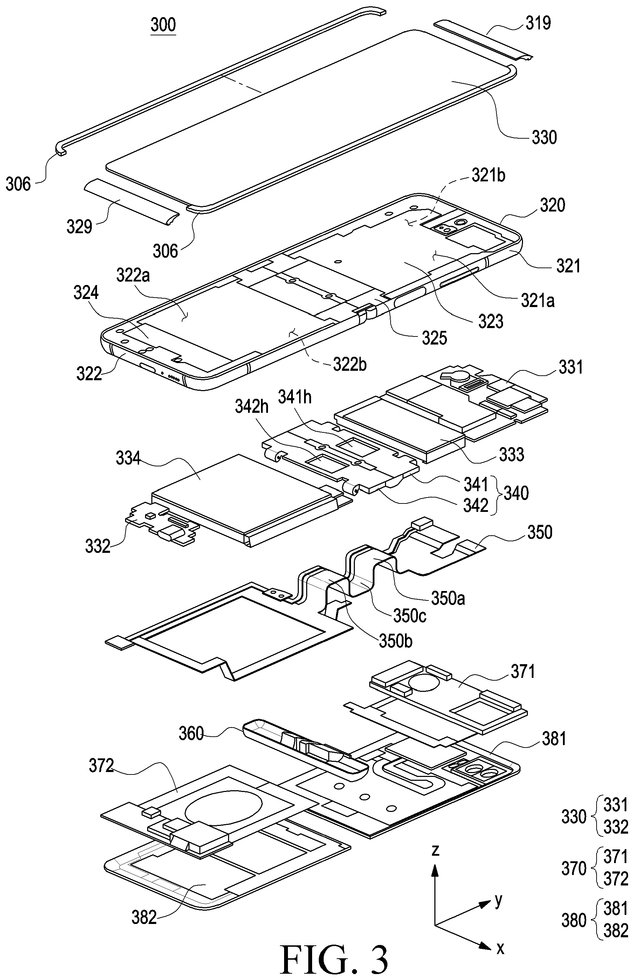

According to various embodiments, a foldable housing may be implemented by a combination of the first housing 210, the second housing 220, the first rear cover 240, the second rear cover 250, and the hinge module (e.g., the hinge structure 340 of FIG. 3). The foldable housing of the electronic device 200 is not limited to the shape and coupling shown but may rather be implemented in other shapes or via a combination and/or coupling of other components. For example, in another embodiment, the first housing 210 and the first rear cover 240 may be integrally formed with each other, and the second housing 220 and the second rear cover 250 may be integrally formed with each other. According to various embodiments of the disclosure, 'housing' may mean a combination of other various components not mentioned and/or a combined configuration thereof. For example, it may be described that a first area 213a of the display 230 forms one surface of the first housing 210 and, in another embodiment, the first area 213a of the display 230 is disposed or attached to one surface of the first housing 210.

According to various embodiments, the first housing 210 may be connected to the hinge structure (e.g., the hinge structure 340 of FIG. 3 described below) and may include a first surface 210a facing in a first direction and a second surface 210b facing in a second direction opposite to the first direction. The second housing 220 may be connected to the hinge structure (e.g., the hinge structure 340 of FIG. 3 described below) and may include a third surface 220a facing in a third direction and a fourth surface 220b facing in a fourth direction opposite to the third direction and may be rotated or pivoted from the first housing 210 about the hinge structure (or folding axis A).

According to various embodiments, the first housing 210 and the second housing 220 may be disposed on two opposite sides (or upper/lower sides) of the folding axis A and may overall have a symmetrical shape with respect to the folding axis A. The angle or distance between the first housing 210 and the second housing 220 may be varied depending on whether the electronic device 200 is in the unfolded state, the folded state, or the partially unfolded (or partially folded) intermediate state. According to an embodiment, the first housing 210 may further include various sensors unlike the second housing 220 but, in the remaining area, the first housing 210 and the second housing 220 may have symmetrical shapes with each other.

According to various embodiments, the first housing 210 and the second housing 220 may at least partially be formed of a metal or non-metallic material with a rigidity selected to support the display 230. The at least a portion formed of the metal material may be provided as a ground plane or radiating conductor of the electronic device 200 and, if provided as the ground plane, it may be electrically connected with a ground line formed on the printed circuit board (e.g., the printed circuit board 330 of FIG. 3).

According to various embodiments, the first rear cover 240 may be disposed on one side (e.g., the upper side in FIG. 2) of the folding axis A, on the rear surface of the electronic device 200, e.g., it may have a substantially rectangular periphery which may be surrounded by the first housing 210 (and/or the side bezel structure). Similarly, the second rear cover 250 may be disposed on the opposite side (e.g., the lower side in FIG. 2) of the folding axis A on the rear surface of the electronic device 200 and its periphery may be surrounded by the second housing 220 (and/or the side bezel structure).

According to various embodiments, the first rear cover 240 and the second rear cover 250 may be substantially symmetrical in shape with respect to the folding axis A. However, the first rear cover 240 and the second rear cover 250 are not necessarily symmetrical in shape. In another embodiment, the electronic device 200 may include the first rear cover 240 and the second rear cover 250 in various shapes. In another embodiment, the first rear cover 240 may be integrally formed with the first housing 210, and the second rear cover 250 may be integrally formed with the second housing 220.

According to various embodiments, the first rear cover 240, the second rear cover 250, the first housing 210, and the second housing 220 may form a space where various components (e.g., the printed circuit board 330 or batteries 333 and 334 of FIG. 3) of the electronic device 200 may be disposed. According to an embodiment, one or more components may be arranged or visually exposed on/through the rear surface of the electronic device 200. For example, at least a portion of a sub display 239 may be visually exposed through the first rear cover 240. In another embodiment, one or more components or sensors may be visually exposed through the first rear cover 240. According to various embodiments, the components or sensors may include a proximity sensor, a rear camera, and/or a flash. Although not separately shown in the drawings, one or more other components or sensors may be visually exposed through the second rear cover 250.

According to various embodiments, the front camera 251 exposed from the front surface of the electronic device 200 through one or more openings or the rear camera 253 exposed through the first rear cover 240 may include one or more lenses, an image sensor, and/or an image signal processor. The flash (not shown) may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 200.

According to various embodiments, the electronic device 200 may transform into a folded status or an unfolded status. For example, the first housing 210 and the second housing 220 may be pivoted about each other between a first position, in which they face each other, and a second position (e.g., the status shown in FIG. 2) unfolded from the first position by a designated angle. FIG. 2 exemplifies an unfolded state of the first housing 210 and the second housing 220 which form about 180 degrees therebetween. In the folded state, e.g., the first position, the first area 231a and the second area 231b of the display 230 are positioned to face each other, and the folding area 231c may be deformed into a curved shape.

According to various embodiments, the electronic device 200 may be implemented as two types, 'in-folding' in which the first area 231a and the second area 231b are folded to face each other, and 'out-folding' in which the first area 231a and the second area 231b are folded to face in opposite directions. For example, in the in-folding folded state, the first area 231a and the second area 231b may be substantially hidden and, in the fully unfolded state, the first area 231a and the second area 231b may be disposed to face substantially in the same direction. As another example, in the out-folding folded state, the first area 231a and the second area 231b are disposed to face in opposite directions, exposed to the outside and, in the fully unfolded state, the first area 231a and the second area 231b may be disposed to face substantially in the same direction.

According to various embodiments, the display 230 may include a display panel (e.g., the display panel 330a of FIG. 5) and a window member (e.g., the thin film plate 330b of FIG. 5) and may be formed of a flexible material. Although not separately shown, it will be appreciated by one of ordinary skill in the art that the display 230 or display panel 330a includes various layers, such as a light emitting layer, a substrate(s) for encapsulating the light emitting layer, an electrode or wiring layer, and/or an adhesive layer(s) for bonding different layers. When the display 230 (e.g., the folding area 231c) is deformed into a flat or curved shape, a relative displacement may occur between the layers constituting the display 230. The relative displacement due to the deformation of the display 203 may increase as it is farther away from the folding axis A and/or as the thickness of the display 230 increases.

According to various embodiments, the window member, e.g., the thin film plate 330b, may serve as a protective film to protect the display panel 330a. As a protection film, the thin film plate 330b may be formed of a material that protects the display panel 330a from external impact, is robust against scratches, and causes fewer creases in the folding area 231c when the housings 210 and 220 are repeatedly folded and unfolded. For example, the material of the thin film plate 330b may include a clear polyimide (CPI) film or ultra-thin glass (UTG).

According to various embodiments, the electronic device 200 may further include a protection member(s) 206 or ornamental covers 219 and 229 disposed at at least a portion of the edge of the display 230 on the front surface (e.g., the front surface 210a or the third surface 220a). The protection member 206 or ornamental covers 219 and 229 may prevent at least a portion of the edge of the display 230 from contacting a mechanical structure (e.g., the first housing 210 or the second housing 220) and provide a decorative effect to the exterior of the electronic device 200. The configuration of the protection member 206 and the ornamental covers 219 and 229 is described in more detail in connection with FIGS. 3 to 9.

FIG. 3 is an exploded perspective view illustrating an electronic device 300 (e.g., the electronic device 200 of FIG. 2) according to various embodiments of the disclosure.

Referring to FIG. 3, in various embodiments, the electronic device 300 may include a display 330 (e.g., the display 230 of FIG. 2), a foldable housing (e.g., the first housing 321 and the second housing 322), a printed circuit board 330, a hinge structure 340, a flexible connection member 350, a hinge cover 360, an antenna module 370, and a rear cover 380. In an embodiment, the electronic device 300 may include at least one protection member 306 and/or at least one ornamental cover 319 or 329. The protection member 306 and/or the ornamental covers 319 and 329 may be disposed adjacent to at least a portion of the circumference of the display 330 (e.g., the display 230 of FIG. 2).

According to various embodiments, the display 330 may be exposed through a majority of the front surface of the electronic device 300. According to an embodiment, the shape of the display 330 may be formed to be substantially the same as the shape of the periphery of the front surface of the electronic device 300.

According to various embodiments, the foldable housing of the electronic device 300 may include the first housing 321 and the second housing 322. According to an embodiment, the first housing 321 may include a first surface 321a and a second surface 321b facing in a direction opposite to the first surface 321a. The second housing 322 may include a third surface 322a and a fourth surface 322b facing in a direction opposite to the third surface 322a. The electronic device 300 or the foldable housing 321 and 322 may additionally or alternatively include a bracket assembly 325. The bracket assembly 325 may include a first bracket assembly 323 disposed in the first housing 321 and a second bracket assembly 324 disposed in the second housing 322. At least a portion of the bracket assembly 325, e.g., at least a portion of the first bracket assembly 323 and at least a portion of the second bracket assembly 324, may serve as a plate for supporting the hinge structure 340.

According to various embodiments, various electric components may be disposed on the printed circuit board 330. For example, a processor (e.g., the processor 120 of FIG. 1), a memory (e.g., the memory 130 of FIG. 1), and/or an interface (e.g., the interface 177 of FIG. 1) may be mounted on the printed circuit board 330. The processor may include one or more of, e.g., a central processing unit, an application processor, a graphic processing device, an image signal processing device, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 300 with an external electronic device and may include a USB connector, an SD card/multimedia card (MMC) connector, or an audio connector.

According to various embodiments, the printed circuit board 330 may include a first printed circuit board 331 disposed on the side of the first bracket assembly 323 and a second printed circuit board 332 disposed on the side of the second bracket assembly 324. The first printed circuit board 331 and the second printed circuit board 332 may be disposed inside the space formed by the foldable housing 321 and 322, the bracket assembly 325, the first rear cover 381 and/or the second rear cover 382. Components for implementing various functions of the electronic device 300 may be disposed on the first printed circuit board 331 and the second printed circuit board 332. For example, a processor may be disposed on the first printed circuit board 331, and an audio interface may be disposed on the second printed circuit board 332.

According to various embodiments, batteries 333 and 334 may be disposed adjacent to the printed circuit board 330 to supply power to the electronic device 300. At least a portion of the batteries 333 and 334 may be disposed on substantially the same plane as the printed circuit board 330. According to an embodiment, a first battery 333 may be disposed adjacent to the first printed circuit board 331, and a second battery 334 may be disposed adjacent to the second printed circuit board 332. The batteries 333 and 334 may be a device for supplying power to at least one component of the electronic device 300. The battery 189 may include, e.g., a primary cell which is not rechargeable, a secondary cell which is rechargeable, or a fuel cell. The batteries 333 and 334 may be integrally or detachably disposed inside the foldable housing 321 and 322.

According to various embodiments, the hinge structure 340 may be a component to provide a folding axis (e.g., the folding axis A of FIG. 2) and rotatably connect or couple the foldable housing 321 and 322 and/or the bracket assembly 325. The hinge structure 340 may include a first hinge structure 341 disposed on the side of the first printed circuit board 331 and a second hinge structure 342 disposed on the side of the second printed circuit board 332. The hinge structure 340 may be disposed between the first printed circuit board 331 and the second printed circuit board 332. According to an embodiment, the hinge structure 340 may be formed substantially integrally with at least a portion of the first bracket assembly 323 and at least a portion of the second bracket assembly 324.

According to various embodiments, a 'housing structure' may include the foldable housing 321 and 322 and may denote one resultant from assembling and/or combining at least one component disposed in the foldable housing 321 and 322. The housing structure may include a first housing structure and a second housing structure. For example, a component assembled to include at least one component among the first housing 321 and the first bracket assembly 323, the first printed circuit board 331, and the first battery 333 disposed inside the first housing 321 may be referred to as the 'first housing structure.' As another example, a component assembled to include at least one component among the second housing 322 and the second bracket assembly 324, the second printed circuit board 332, and the second battery 334 disposed inside the second housing 322 may be referred to as the 'second housing structure.' However, it should be noted that the 'first housing structure and the second housing structure' are not limited to the addition of the above-described components, but may add or omit various other components.

According to various embodiments, the flexible connection member 350 may be, e.g., a flexible printed circuit board (FPCB). The flexible connection member 350 may connect various electrical elements disposed on the first printed circuit board 331 and the second printed circuit board 332. To this end, the flexible connection member 350 may be disposed to cross the 'first housing structure' and the 'second housing structure'. According to an embodiment, the flexible connection member 350 may be disposed to cross at least a portion of the hinge structure 340. According to an embodiment, the flexible connection member 350 may be configured to connect the flexible printed circuit board 331 and the second printed circuit board 332 across the hinge structure 340 along a direction parallel to, e.g., the y axis of FIG. 3. As another example, the flexible connection member 350 may extend or be disposed through the openings 341h and 342h formed in the hinge structure 340. In this case, a portion 350a of the flexible connection member 350 may be disposed over one side (e.g., upper portion) of the first hinge structure 341, and another portion 350b of the flexible connection member 350 may be disposed over one side (e.g., upper portion) of the second hinge structure 342. Another portion 350c of the flexible connection member 350 may be disposed on the other side (e.g., lower portion) of the first hinge structure 341 and the second hinge structure 342. A space (hereinafter, referred to as a 'wiring space') surrounded by at least a portion of the first hinge structure 341, at least a portion of the second hinge structure 342, and at least a portion of the hinge cover 360 may be formed in a position adjacent to the first hinge structure 341 and the second hinge structure 342. According to an embodiment, at least a portion 350c of the flexible connection member 350 may be disposed in the wiring space.

According to various embodiments, the hinge cover 360 may be a component that covers at least a portion of the hinge structure 340 or the wiring space. **In** an embodiment, the hinge cover 360, together with the hinge structure 340, may form the wiring space and protect components (e.g., at least a portion 350c of the flexible connection member 350) disposed in the wiring space from external impact. According to an embodiment, the hinge cover 360 may be disposed between the first housing 321 and the second housing 322. **In** the electronic device 300 which is of an in-folding type, the hinge cover 360 may be at least partially concealed by the foldable housing 321 and 322. For example, in the folded state, the hinge cover 360 may be visually exposed to the external space between the rear surface (e.g., the first rear cover 381) of the first housing 321 and the rear cover (e.g., the second rear cover 382) of the second housing 322 and, in the unfolded state, the hinge cover 360 may be substantially received inside the first housing 321 or the second housing 322 to be visually concealed.

According to various embodiments, the antenna module 370 (e.g., the antenna module 197 of FIG. 1) may be disposed between the rear cover 380 and the batteries 333 and 334. According to an embodiment, the antenna module 370 may include a first antenna module 371 disposed on the side of the first housing 321 and a second antenna module 372 disposed on the side of the second housing 322. The antenna module 370 may include, e.g., a near field communication (NFC) antenna, a wireless charging antenna, and/or a magnetic secure transmission (MST) antenna, performing short-range communication with an external device or wirelessly transmitting/receiving power required for charging. According to another embodiment, an antenna structure may be formed by a portion or combination of the side bezel structure of the foldable housing 321 and 322 and/or bracket assembly.

According to various embodiments, the rear cover 380 may include a first rear cover 381 and a second rear cover 382. The rear cover 380 may be combined with the foldable housing 321 and 322 to protect the above-described components (e.g., the printed circuit board 330, the batteries 333 and 334, the flexible connection member 350, and the antenna structure 370) disposed in the foldable housing 321 and 322. As described above, the rear cover 380 may be configured substantially integrally with the foldable housing 321 and 322.

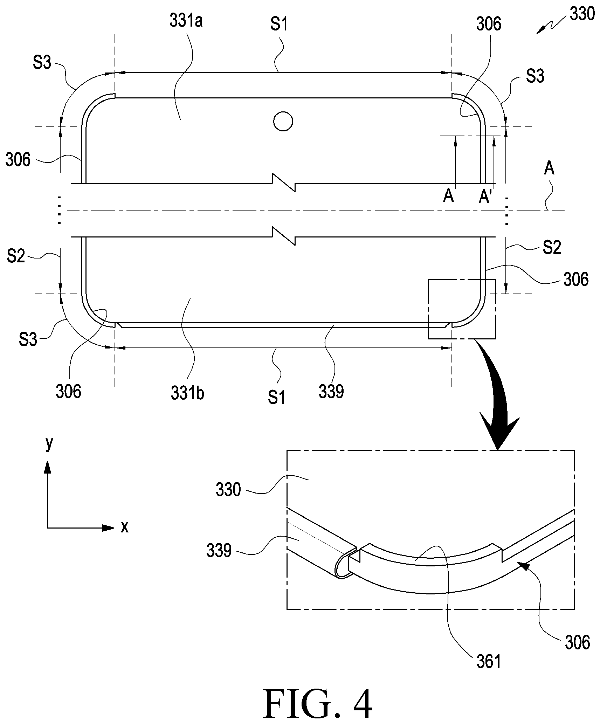

According to various embodiments, the protection member 306 and/or the ornamental covers 319 and 329 (e.g., the protection member 206 and/or the ornamental covers 219 and 229 of FIG. 2) may protect at least a portion of the edge of the display 330. In an embodiment, the protection member 306 may be disposed between the edge of the display 330 and the inner wall of the first housing 310 and/or between the edge of the display 330 and the inner wall of the second housing 320 to prevent direct contact between the edge of the display 330 and the inner wall of the foldable housing 321 and 322. In another embodiment, the ornamental cover 319 may be disposed on at least one of the first housing 310 and the second housing 320 and may be disposed to cover a portion of the edge of the display 330. The configuration of the protection member 306 and the ornamental cover 319 is described in more detail in connection with FIGS. 4 to 19.

FIG. 4 is a view illustrating a display 330 of an electronic device (e.g., the electronic device 300 of FIG. 3) according to various embodiments of the disclosure.

Referring to FIG. 4, the edge of the display 330 (e.g., the flexible display 230 and 330 of FIG. 2 or 3) may include first sections S1, second sections S2, and/or curved sections S3 connecting the first sections S1 and the second sections S2. The first sections S1 may extend parallel to, e.g., the folding axis (e.g., the folding axis A of FIG. 2). The second sections S2 may extend to cross the folding axis A. According to an embodiment, the first sections S1 may be disposed substantially parallel to the folding axis A. The second sections S2 may be disposed perpendicular to the folding axis A. For example, the display 330 may have a substantially rectangular shape, and the first section S1 and the second section S2 may be connected through one of the curved sections S3.

In various embodiments of the disclosure, the shape of the display 330 and the directions in which the first section S1 and the second section S2 are extended (or disposed) are not limited to the above-mentioned embodiments and, depending on the shape of the actually manufactured display 330, a part of the first section S1 or the second section S2 may be formed to be curved. In another embodiment, the first sections S1 may be curved or inclined with respect to the folding axis A and be disposed in a position spaced apart by a designated distance from the folding axis A not to cross the folding axis A at the front view of FIG. 2. In another embodiment, a notch area (e.g., a transparent area) for placing sensors may be provided in a portion of the edge of the display 330 and, in this case, a portion of the first section S1 or the second section S2 may be included in the edge of the notch area.

According to various embodiments, the electronic device (e.g., the electronic device 200 or 300 of FIG. 2 or 3) or the display 330 may further include a flexible printed circuit board extending from at least one of the first sections S1. Although the flexible printed circuit board 339 may extend substantially along the direction in which the second section S2 extends, FIG. 4 exemplifies a configuration in which most of the flexible printed circuit board 339 is disposed on the rear surface (e.g., the inner surface facing in the -z direction in FIG. 5) of the display 330, without illustrating the entire shape of the flexible printed circuit board. For example, the flexible printed circuit board 339 may be connected to a portion of the edge of the display 330 and may be disposed generally on the rear surface of the display 330. In an embodiment, the flexible printed circuit board 339 is connected to an electronic object integrated into display 330, such as an electrode layer (e.g., thin film transistor layer) or touch detection layer, to transfer power, control signals, and/or detection signals.

According to various embodiments, a protection member (e.g., the protection member 306 of FIG. 3) may be disposed on at least a portion of the edge of the display 330. For example, the protection member 306 may be disposed on at least a portion of the curved section S3 and the second section S2 in the edge of the display 330. The protection member 306 may be formed, e.g., by applying a molten resin to the edge of the display 330 and then curing it, and be at least partially disposed between the edge of the display 330 and the structure (e.g., the inner wall of the first housing 321 or the second housing 322 of FIG. 3) of the electronic device 300. The shape of the protection member 306 is described further with reference to FIGS. 5 and 6.

FIG. 5 is a cross-sectional view illustrating an embodiment of a portion of a display 330, taken along line A-A' of FIG. 4. FIG. 6 is a cross-sectional view illustrating another embodiment of a portion of a display 330, taken along line A-A' of FIG. 4.

Referring to FIGS. 5 and 6, a protection member 306 may be formed to substantially surround the edge of the display 330 or the side surface of the display 330 facing in the +x/-x direction and, according to an embodiment, be formed to further surround the inner surface (e.g., the surface facing in the -z direction) and/or outer surface (e.g., the surface facing in the +z direction) in the edge of the display 330. For example, the protection member 306 may be disposed to at least partially surround the edge of the display 330 to protect the display 330 from the external environment. In another embodiment, it has been mentioned above that when the display 330 is folded or rolled, a relative displacement may occur between different layers (e.g., the display panel 330a and the thin film plate 330b) of the display 330. Due to the relative displacement, any of one, two or more layers (e.g., the thin film plate 330b) of the display 330 may contact a structure (e.g., the inner wall of the foldable housing 321 and 322 of FIG. 3), damaging the display 330. In an embodiment, although no displacement occurs between the layers, if the edge of the display 330 directly contacts the housings 321 and 322, the display 330 (e.g., the thin film plate 330b) may easily be damaged. According to various embodiments of the disclosure, the protection member 306 may be disposed on at least a portion between the edge of the display 330 and the structure (e.g., the inner wall of the housing(s) 321 and 322), preventing damage to the display 330.

Referring back to FIG. 4, the electronic device 300 or the protection member 306 may further include a cushioning protrusion 361. The cushioning protrusion 361 is a portion in which a portion of the surface of the protection member 306 further protrudes from the other portions and may be disposed on one surface of any one of the first housing 321 and the second housing 322 at a designated distance from the folding axis A. Here, "one surface of any one of the first housing 321 and the second housing 322" may mean a surface facing the other one of the first housing 321 and the second housing 322 in a first position (or folded state). For example, in the case of the electronic device 200 or 300 of FIG. 2 or 3, the cushioning protrusion 361 may be disposed to protrude from a lower end on the front surface (e.g., the third surface 220a) of the second housing 220 or 322. In an embodiment, in the first position (or folded state), the cushioning protrusion 361 may contact the other one of the first housing 210 or 321 and the second housing 220 or 322. For example, if the electronic device 200 or 300 of FIG. 2 or 3 is folded, the cushioning protrusion 361 may contact the first housing 210 or 321 but may not substantially contact the first surface 210a and the third surface 220a. In an embodiment, the impact generated as the first surface 210a and the third surface 220a directly contact each other upon folding may damage an electronic component, such as the display 330, or cause deformation or cracks in the first housing 210 or 321 or the second housing 220 or 322. For example, the cushioning protrusion 361 may mitigate or prevent the impact caused at least during folding.

According to various embodiments, in the folded state (e.g., first position) and unfolded state (e.g., the second position of FIG. 2), if the display panel (e.g., the display panel 330a of FIG. 5) remains at the same length, the thin film plate (e.g., the thin film plate 330b of FIG. 5) may be at least partially moved to another point with respect to the display panel according to the folded state or unfolded state. In an embodiment, in a structure in which the thin film plate 330b is moved with respect to the display panel 330a according to the folded state and unfolded state, the upper end and lower end (e.g., the portions corresponding to the first sections S1 of the display 330) of the thin film plate 330b may be positioned farther from the folding axis A in the folded state than in the unfolded state. In another embodiment, if a first distance is formed between the upper end of the display panel 330a and the upper end of the thin film plate 330b in the unfolded state, a second distance larger than the first distance may be formed in the folded state.

According to various embodiments, the actual length of the display panel 330a or the thin film plate 330b may not be increased or decreased. Various embodiments of the disclosure allow such a relative displacement between the layers (e.g., the display panel 330a or the thin film plate 330b) of the display 330 during folding or unfolding, preventing application of tension or compression to any one of the layers of the display 330. According to an embodiment, the protection member 306 may substantially be disposed on a side surface (e.g., the surface facing in the +x direction or -x direction of FIG. 5) of the display 330 but may not be disposed on a side surface (e.g., the side surface or edge disposed parallel to the folding axis A) facing in the +y direction or -y direction. For example, the protection member 306 may not be disposed in the first section S1 and/or a portion of the curved section S3 contacting the first section S1 in the edge of the display 330. In the section where the protection member 306 is not disposed, a portion (e.g., the side surface facing in the +y direction or -y direction of FIG. 5) of the display 330 may be disposed to directly face the inner wall of the housings 321 and 322.

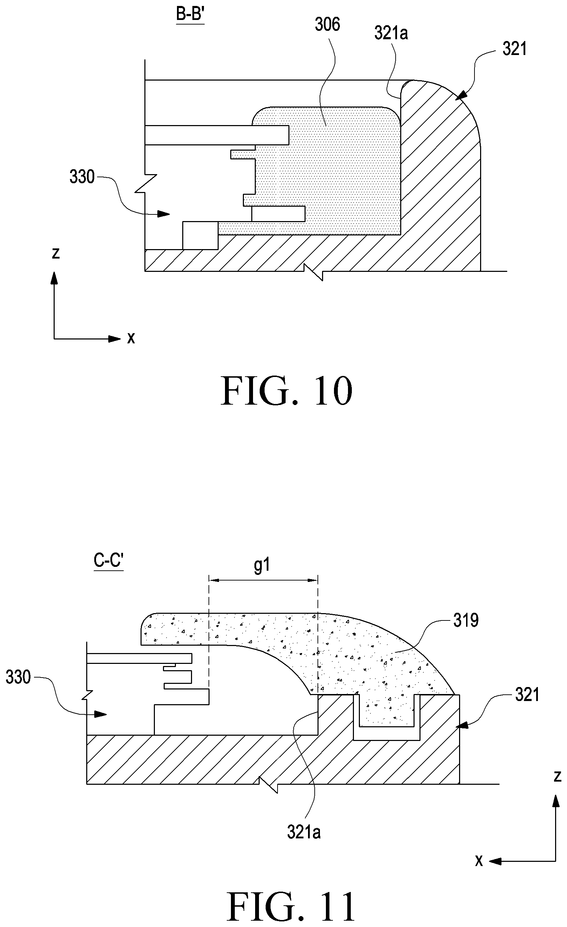

According to various embodiments, the protection member 306 may restrict displacement between the layers of the display 330. For example, when the protection member 306 is disposed in the first section S1, displacement between the display panel 330a and the thin film plate 330b may be restricted and, during folding or unfolding, tension or compression may be applied to the display panel 330a or the thin film plate 330b. The tension or compression applied to the display panel 330a or the thin film plate 330b may damage the display panel 330a (e.g., light emitting layer) or cause permanent deformation (e.g., creases) of the thin film plate 330b. In various embodiments of the disclosure, as the protection member is not disposed in the section (e.g., the first section S1) parallel or side-by-side to the folding axis A in the edge of the display 330, a relative displacement between the layers of the display 330 may be allowed during folding or unfolding. In another embodiment, in the section where the protection member S1 is not disposed, the edge of the display 330 may be disposed to directly face the structure, while leaving a designated gap (e.g., the first gap g1 of FIG. 11) between it and the structure (e.g., the inner wall of the first housing 321 or the inner wall of the second housing 322). For example, as the protection member 306 is not disposed, it is possible to allow a relative displacement between the layers of the display 330 and to prevent contact between any one of the layers of the display 330 and the inner wall of the housings 321 and 322 due to a relative displacement in the section where the protection member 306 is not disposed.

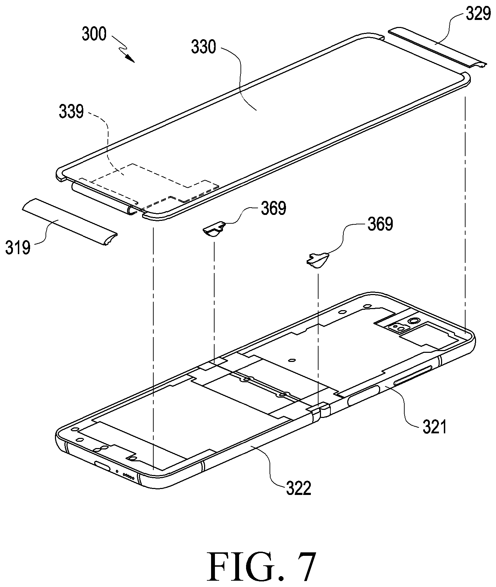

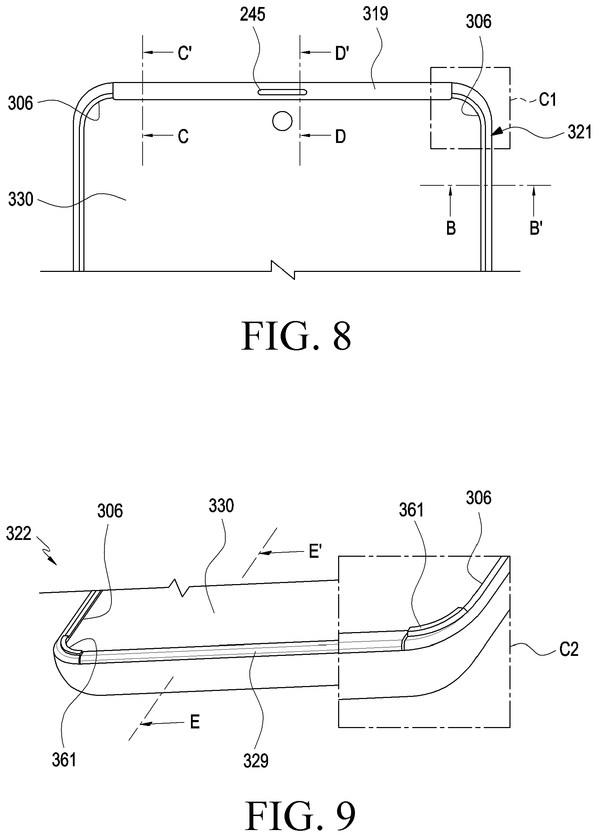

FIG. 7 is a perspective view illustrating a state in which a display 330 is assembled in an electronic device (e.g., the electronic device 200 or 300 of FIG. 2 or 3) according to various embodiments of the disclosure. FIG. 8 is a view illustrating an example of a portion of a first housing 321 of an electronic device 300 according to various embodiments of the disclosure. FIG. 9 is a view illustrating an example of a portion of a second housing 322 of an electronic device 300 according to various embodiments of the disclosure.

Referring to FIGS. 7 to 9, in a state where the housings 321 and 322 are coupled by a hinge structure (e.g., the hinge structure 340 of FIG. 3), the display 330 may be placed on or mounted to the housings 321 and 322. According to an embodiment, as the protection member 306 is formed in at least a portion of the curved section (e.g., the curved section S3 of FIG. 4), the position of assembly of the display 330 may be set on the foldable housing 321 and 322. For example, as the protection member 306 is disposed to substantially contact the inner wall of the first housing 321 or the inner wall of the second housing 322, the position of the display 330 may be determined.

According to various embodiments, when the display 330 is disposed at a designated gap from the structure (the inner wall of the first housing 321 or the inner wall of the second housing 322) around the entire section of the edge of the display 330 when mounting the display 330 without the protection member 306, use of a jig or an automation device may be inevitable. For example, a restriction may be imposed on the process of mounting the display 330 to the foldable housing 321 and 322. According to various embodiments of the disclosure, as the protection member 306 guides the assembly position of the display 330, it is possible to enhance the degree of freedom in design in the assembly structure or manufacture fixing.

According to various embodiments, as the display 330 is disposed at a designated gap from the inner wall of the first housing 321 or the inner wall of the second housing 322 in assembling the display 330 without the protection member 306, it is possible to prevent direct contact between the edge of the display 330 and the structure (e.g., the inner wall of the first housing 321 or the inner wall of the second housing 322) even in the absence of the protection member 306. In an embodiment, as the electronic device 300 includes an ornamental cover(s) 319 and 329, the gap formed between the inner wall of the housings 321 and 322 and the display 330 may be concealed. For example, the gap visually exposed may be concealed by means of the ornamental covers 319 and 329.

According to various embodiments, the ornamental covers 319 and 329 may be an obstacle to securing a wide screen display area on the front surface of the electronic device 300. For example, the area for mounting the ornamental covers 319 and 329 to the first housing 321 or the second housing 322 or the area where the ornamental covers 319 and 329 overlap the display 330 may be limited by being substantially used as the screen display area. According to various embodiments of the disclosure, the protection member 306 may protect the display 330 while reducing the gap between the edge of the display 330 and the structure (e.g., the inner wall of the first housing 321 or the inner wall of the second housing 322) in a partial area or section (e.g., at least a portion of the curved section S3 and the second section S2 of FIG. 4). For example, the section where the protection member 306 is disposed may protect the display 330, secure a wide screen display area, and provide an elegant look to the electronic device 300 even without the use of the ornamental covers 319 and 329.

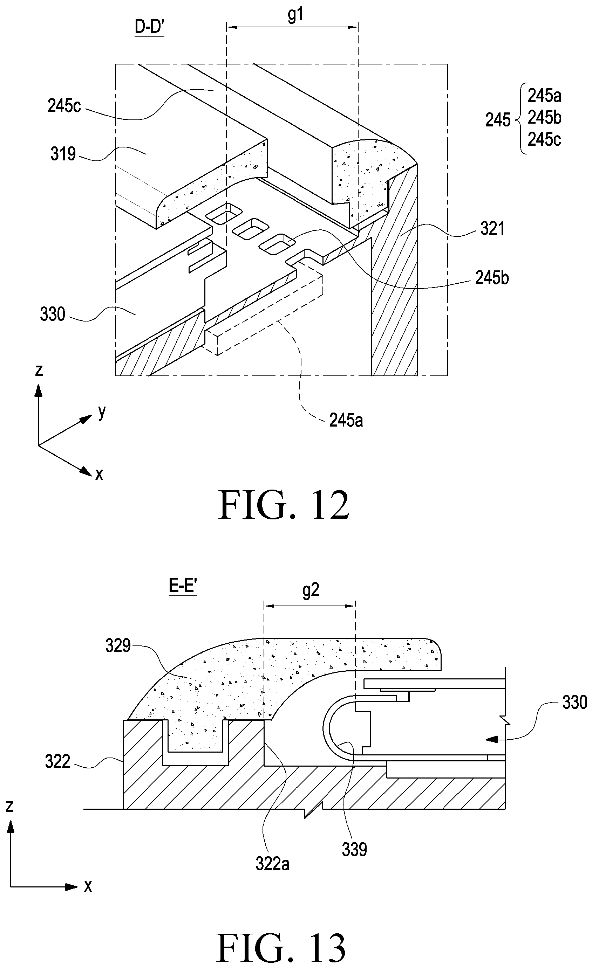

According to various embodiments, as the protection member 306 is not disposed in another partial area or section (e.g., the first section S1 of FIG. 4) around the edge of the display 330, a relative displacement may be allowed between the layers of the display 330. In an embodiment, the section where the protection member 306 is not disposed may be spaced apart from the inner wall of the first housing 321 and/or the inner wall of the second housing 322 by a designated gap. In another embodiment, the ornamental covers 319 and 329 may be disposed in the first housing 321 and/or the second housing 322, concealing the gap (e.g., the first gap g1 of FIG. 11) formed in the section (e.g., the first section S1) where the protection member 306 is not disposed. For example, the ornamental covers 319 and 329 may impart a visual decorative effect in the section where the protection member 306 is not disposed and prevent entrance of a foreign body into the gap between the inner wall of the first housing 321 and/or the inner wall of the second housing 322. In an embodiment, a first ornamental cover 319 disposed in the first housing 321 of the ornamental covers 319 and 329 may include a receiver hole, a speaker hole, or a sound hole (e.g., the second sound hole 245c of FIG. 12) provided as part of the audio module 245, and the cushioning protrusion 361 may be disposed adjacent to the ornamental cover (e.g., the second ornamental cover 329) on the second housing 322.

FIG. 10 is a cross-sectional view illustrating a portion of a first housing 321, taken along line B-B' of FIG. 8.

FIG. 10 is a cross-sectional view of, e.g., the second section S2 cut at one point. Referring further to FIG. 10, the protection member 306 may be formed to surround one side surface (e.g., the surface facing in the +x direction or the surface facing in the -x direction) of the display 330 and, according to an embodiment, be formed to surround a portion of the edge of the inner surface and outer surface of the display 330. If the display 330 is disposed on the foldable housing 321 and 322, the protection member 306 may be disposed to substantially contact the foldable housing 321 and 322 (e.g., the inner wall 321a of the first housing 321). In an embodiment, during folding or unfolding, since no substantial displacement occurs in the x direction between the layers of the display 330, the gap between the edge of the display 330 and the inner wall 321a may be secured to prevent a degree of interference in the assembly process. In another embodiment, the protection member 306 may impart a decorative effect to the exterior of the electronic device 300 while concealing the gap between a portion of the edge of the display 330 and the inner wall 321a. In an embodiment, since it is not needed to dispose an ornamental cover (e.g., the ornamental covers 319 and 329 of FIG. 7) in the area where the protection member 306 is disposed, the protection member 306 may contribute to further securing a screen display area in electronic devices 300 having the same size. For example, as the protection member 306 is disposed, the width of the display 330 at least in the x-axis direction, substantially identical to the width of the first housing 321 or the second housing 322 (e.g., about 95% or more of the width of the first housing 321 or the second housing 322), may be secured.

FIG. 11 is a cross-sectional view illustrating another portion of a first housing 321, taken along line C-C' of FIG. 8. FIG. 12 is a perspective view illustrating another portion of a first housing 321, taken along line D-D' of FIG. 8.

Referring further to FIGS. 11 and 12, of the ornamental covers 319 and 329, the first ornamental cover 319 may be disposed in the first housing 321 to conceal the gap (hereinafter, 'first gap g1') between the inner wall 321a of the first housing 321 and the edge (e.g., the upper first section S1 among the first sections S1 of FIG. 4) of the display 330. The first gap g1 may allow a relative displacement between the layers of the display 330 and prevent any one of the layers of the display 330 from contacting the inner wall 321a of the first housing 321. In an embodiment, as the first ornamental cover 319 is substantially disposed on the front surface of the electronic device 300 (e.g., the first surface 210a of the first housing 321 of FIG. 2), the first ornamental cover 319 may conceal the first gap g1 and hide a portion of the edge of the display 330. In an embodiment, the first ornamental cover 319 may prevent entrance of a foreign body into the first gap g1. For example, the first ornamental cover 319 does not directly contact the outer surface of the display 330, but the gap between the first ornamental cover 319 and the outer surface of the display 330 may not be visually recognized by the user.

According to various embodiments, the electronic device 300 may include a speaker 245a provided as the audio module 245 and/or sound holes 245b and 245c. The speaker 245a may be disposed in a space different from that of the display 330 in the first housing 321 and output sound to the outside through the sound holes 245b and 245c. Of the sound holes 245b and 245c, a first sound hole 235b may be formed to pass through the first housing 321 to guide the sound output from the speaker 245a forward of the electronic device 300. FIG. 12 illustrates an example of a configuration in which a plurality of first sound holes 245b are arranged along any one direction (e.g., the x-axis direction) and, in another embodiment, one first sound hole 245b having an elongated hole extending along the x-axis direction may be formed in the first housing 321.

According to various embodiments, the first sound hole(s) 245b may be exposed to the outside through the first gap g1, e.g., a gap between the inner wall 321a of any one (e.g., the first housing 321) of the housings 321 and 322 and the edge (e.g., the side surface facing in the +y direction in FIG. 3 or 4) of the display 330. In an embodiment, since the first gap g1 is concealed by the first ornamental cover 319, the first sound hole(s) 245b may be disposed to substantially face the inner surface of the first ornamental cover 319, and part of the first sound hole 245b may be exposed to the external space through the sound hole (e.g., the second sound hole 245c) formed in the first ornamental cover 319. For example, the first ornamental cover 319 may be disposed to substantially hide the first gap g1 or the first sound hole 245b and be disposed to face the first sound hole 245b through the first gap g1. Thus, the first gap g1, along with the sound holes 245b and 245c, may provide a path for guiding the sound output from the speaker 245a to the external space. In another embodiment, the first gap g1 may allow a relative displacement between the layers (e.g., the display panel 330a and thin film plate 330b of FIG. 5) of the display 330 during folding or unfolding while preventing any one of the layers of the display 330 from contacting the inner wall 321a of the first housing 321.

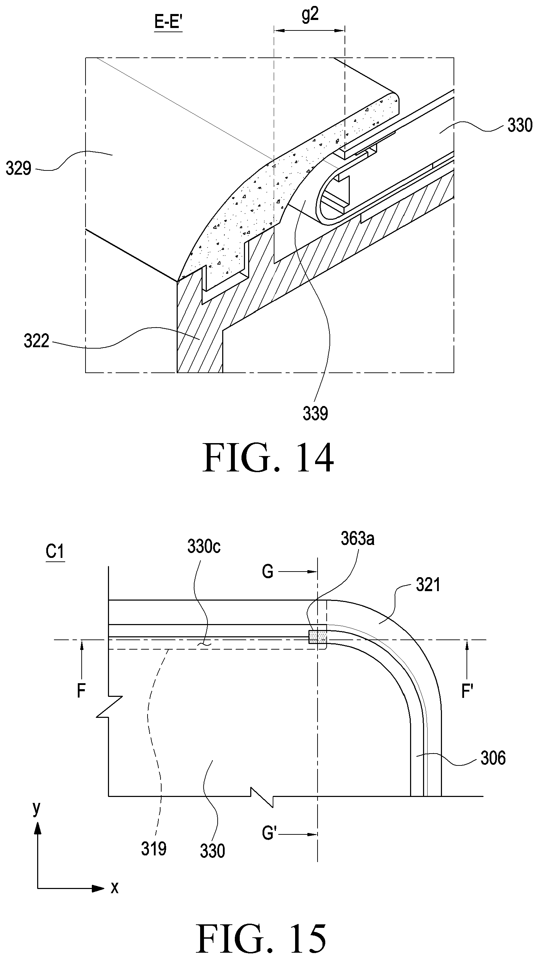

FIG. 13 is a cross-sectional view illustrating a portion of a second housing 322, taken along line E-E' of FIG. 9. FIG. 14 is a perspective view illustrating a portion of a second housing 322, taken along line E-E' of FIG. 9.

Referring further to FIGS. 13 and 14, of the ornamental covers 319 and 329, the second ornamental cover 329 may be disposed at a lower end on the front surface of the electronic device 300, e.g., the edge of the second housing 322, concealing the gap (hereinafter, 'second gap g2') between the inner wall 322a of the second housing 322 and the edge (e.g., the lower first section among the first sections S1 of FIG. 4) of the display 330. The second gap g2 may allow a relative displacement between the layers (e.g., the display panel 330a and thin film plate 330b of FIG. 5) of the display 330 while preventing any one of the layers of the display 330 from contacting the inner wall of the second housing 322. In an embodiment, as the second ornamental cover 329 is substantially disposed on the front surface of the electronic device 300 (e.g., the third surface 220a of the second housing 220 of FIG. 2), the second ornamental cover 329 may conceal the second gap g2 and hide a portion of the edge of the display 330. In an embodiment, the second ornamental cover 329 may prevent entrance of a foreign body into the second gap g2. In an embodiment, the second ornamental cover 329 does not directly contact the outer surface of the display 330, but the gap between the second ornamental cover 329 and the outer surface of the display 330 may not be visually recognized by the user.

According to various embodiments, on the edge or side surface of the display 330, the section (e.g., the first sections S1 of FIG. 4) where the protection member 306 is not disposed may be disposed to directly face the inner walls 321a and 322a of the housings at the first gap g1 or second gap g2. In another embodiment, the first gap g1 or the second gap g2 may be used as a space for placing an electronic object, such as the flexible printed circuit board 339, and, in this case, the edge or side surface of the display 330 may be disposed to face the inner walls 321a and 322a of the housings with an electronic object (e.g., the flexible printed circuit board 339) disposed therebetween. In an embodiment, when an electronic object is disposed in the first gap g1 or the second gap g2, the electronic object may be deformed or moved to allow a displacement between the layers of the display 330.

According to various embodiments, the flexible printed circuit board 339 may extend from one side of the edge of the display 330 and be disposed on the inner surface (e.g., the surface facing in the -z direction in FIG. 13) of the display 330. In an embodiment, a portion of the flexible printed circuit board 339 may be disposed to form a curved shape in the space provided by the second gap g2 to face one side surface (e.g., the surface facing in the -y direction) of the display 330, and at least a remaining portion of the flexible printed circuit board 339 may be disposed substantially on the inner surface of the display 330.

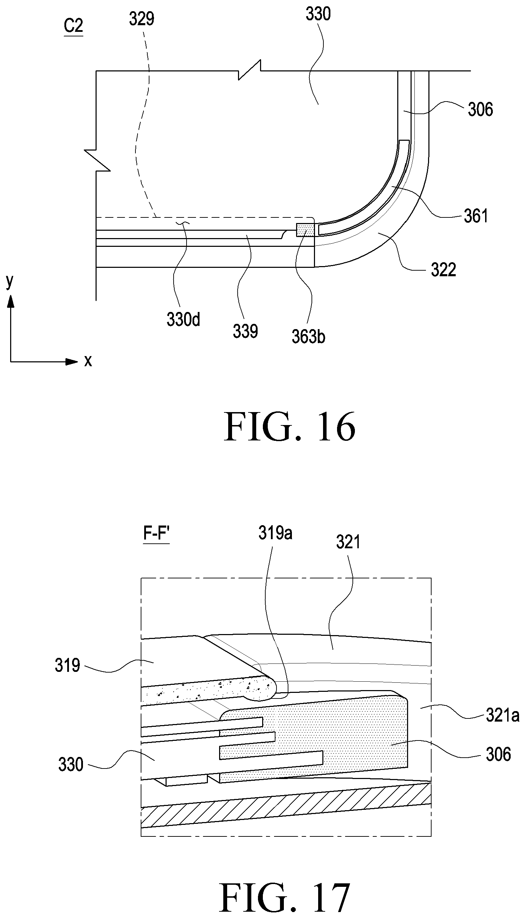

FIG. 15 is an enlarged, plan view illustrating portion 'C1' of FIG. 8. FIG. 16 is an enlarged, plan view illustrating portion 'C2' of FIG. 9.

Referring to FIGS. 15 and 16, when viewed in the z-axis direction, the ornamental covers 319 and 329 may be disposed to overlap a portion of the display 330 and/or a portion of the protection member(s) 306. In FIGS. 15 and 16, the areas where the ornamental cover(s) 319 and 329 and the display 330 overlap each other in the z-axis direction are denoted by '330c' and '330d', and reference numbers '363a' and '363b' exemplify an end of the protection member 306 overlapping the ornamental cover(s) 319 and 329. In an embodiment, as the ornamental cover(s) 319 and 329 is disposed in any one of the housings 321 and 322 to overlap a portion of the edge of the display 330, the gaps between the edge of the display 330 and the inner walls 321a and 322a of the housings 321 and 322 may be concealed.

According to various embodiments, as the ornamental cover(s) 319 and 329 brings one end 363a and 363b of the protection member 306 in tight contact with any one of the housings 321 and 322, the display 330 or the protection member 306 may be prevented from escaping off the housings 321 and 322. For example, 'ornamental cover(s) 319 and 329 overlaps the protection member 306' may mean a structure in which a portion of the protection member 306 is substantially interposed between the ornamental cover(s) 319 and 329 and the housings 321 and 322. Thus, the gaps between the edge of the display 330 and the inner walls 321a and 322a of the housings 321 and 322 may be substantially sealed or concealed by the protection member 306 and/or the ornamental covers 319 and 329. As such, in various embodiments of the disclosure, a portion of the edge of the display 330 may be positioned to face the inner wall 321a or 322a of any one of the housings 321 and 322 with the protection member 306 disposed therebetween, and at least one other portion of the edge of the display 330 may be positioned to directly face the inner wall 321a or 322a of the other one of the housings 321 and 322.

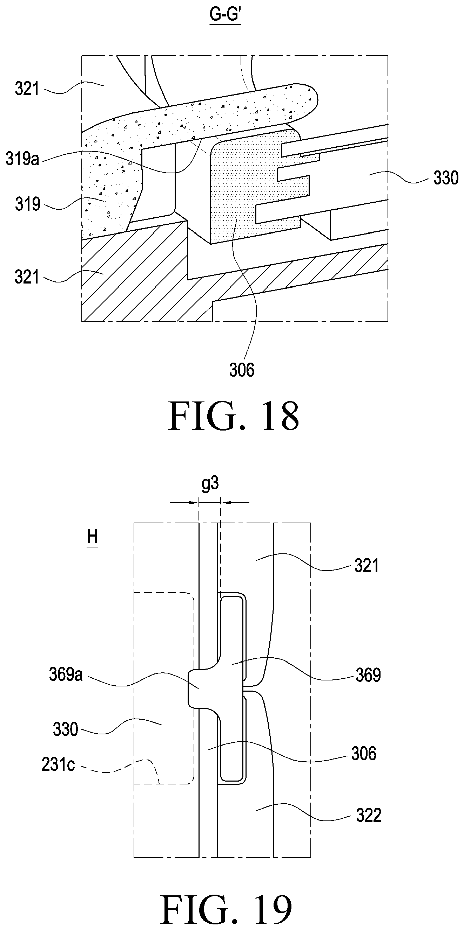

FIG. 17 is a perspective view illustrating a portion of a first housing 321, taken along line F-F' of FIG. 15. FIG. 18 is a perspective view illustrating a portion of a first housing 321, taken along line G-G' of FIG. 15.

Referring to FIGS. 17 and 18, the ornamental cover(s) 319 and 329 may come in point contact or line contact with a portion of the protection member 306. For example, the ornamental cover(s) 319 and 329 may pressurize at least a portion (e.g., the end indicated by '363a' or '363b') of the protection member 306 to tightly contact any one of the housings 321 and 322 while visually concealing any one end 363a or 363b of the protection member 306. In an embodiment, the ornamental cover(s) 319 and 329 may include a pressurizing protrusion 319a protruding from the inner surface in the -z direction and extending along the y-axis direction. For example, at cross-sectional view taken along the x-axis direction, e.g., at the cross-sectional view of FIG. 17, the pressurizing protrusion 319a is a protrusion including a curved surface and may substantially come in point contact with the protection member 306 and, at cross-sectional view taken along the y-axis direction, e.g., at the cross-sectional view of FIG. 18, the pressurizing protrusion 319a may have a line shape to come in line contact with the protection member 306. In an embodiment, in the z-axis direction, the inner surface of the ornamental cover 319 or 329 does not contact the outer surface of the display 330, and the pressurizing protrusion 319a and/or protection member 306 may function as a structure to maintain the gap between the inner surface of the ornamental cover 319 or 329 and the outer surface of the display 330.

FIG. 19 is an enlarged, plan view illustrating portion 'H' of FIG. 2.

Referring to FIG. 19 along with FIG. 7, the electronic device 300 may further include at least one cap member 369. Although exemplified as a separate component, the cap member 369 may be substantially a portion of the hinge cover 360 of FIG. 3. During folding or unfolding, the folding area (e.g., the folding area 231c of FIG. 2) of the display 330 may be moved along the z-axis direction (e.g., the z axis of FIG. 3) in the housings 321 and 322 or be transformed between a flat shape and a curved shape. For example, except for displacement between the layers of the display 330, the first area and the second area (e.g., the first area 231a and second area 231b of FIG. 2) may be substantially fixed to the housings 321 and 322, but the folding area 231c may be moved with respect to the housings 321 and 322. According to an embodiment, sufficient gaps may be formed between the folding area 231c and the housings 321 and 322 to prevent interference between the folding area 231c and the housings 321 and 322, and the gaps between the folding area 231c and the housings 321 and 322 may be concealed by the cap member 369. In an embodiment, a designated gap (hereinafter, 'third gap g3') may also be formed between the cap member 369 and the folding area 231c to prevent interference, and the protection member 306 may be visually exposed to the outside through the third gap g3. For example, the protection member 306 may seal the gaps between the inner walls of the housings 321 and 322 and the display 330 and, in the folding area 231c, close the gap between the cap member 369 and the folding area 231c to block entrance of a foreign body into the inside of the display 330. In an embodiment, the protection member 306 may be formed of an elastic or flexible material that may transform into a curved shape or line shape and be thus transformed along with the folding area.

According to various embodiments, the cap member 369 may prevent the folding area 231c from moving or deforming in the +z direction during folding or unfolding by including a guide protrusion 369a. For example, the guide protrusion 369a may be disposed further in the +z direction than the display 330, hiding a portion of the edge of the display 330 (e.g., the folding area 231c). For example, the guide protrusion 369a may hide a portion of the display 330, limiting the proportion of the screen display area occupied in the electronic device 300 and/or the display 330.

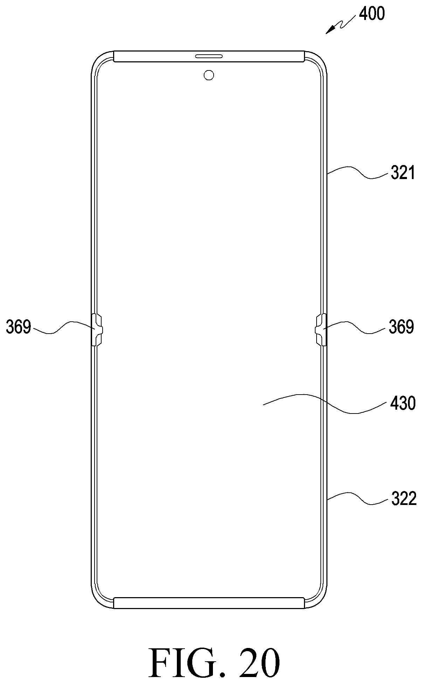

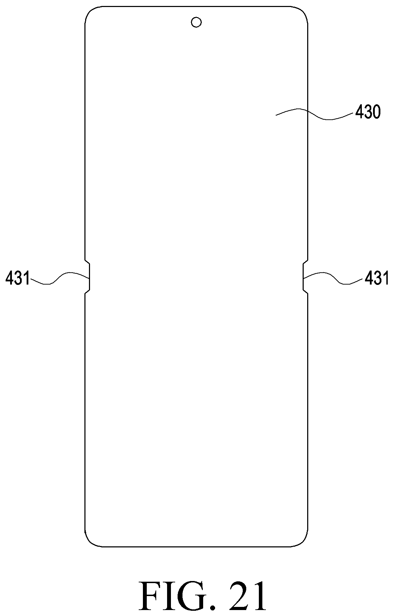

FIG. 20 is a front view illustrating an electronic device 400 (e.g., the electronic device 200 or 300 of FIG. 2 or 3) according to another one of various embodiments of the disclosure. FIG. 21 is a plan view illustrating a display 430 of an electronic device 400 according to another one of various embodiments of the disclosure.

Referring to FIGS. 20 and 21, the electronic device 400 or the display 430 substantially has a rectangular shape but may include notch structures 431 formed in two opposite ends of the folding area (e.g., the folding area 231c of FIG. 2 or 19). The 'notch structure' 431 may mean an inactive area depressed inward of the screen display area from a portion of the edge when viewed in the z-axis direction. The inactive area may be formed corresponding to the guide protrusion (e.g., the guide protrusion 369a of FIG. 19) of the cap member 369 and, as the inactive area is provided, it is possible to prevent limiting the proportion of the screen display area occupied in the electronic device 400 or the display 430.

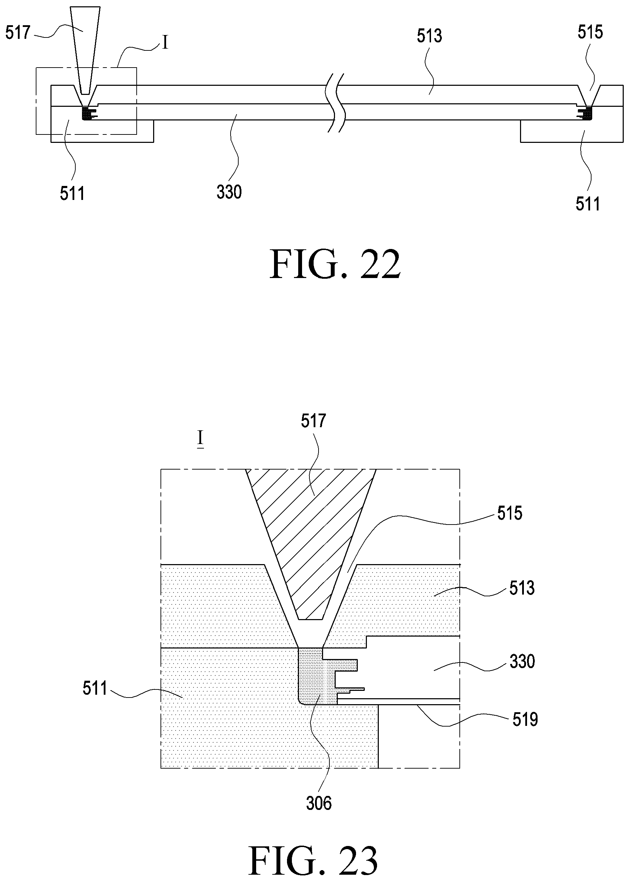

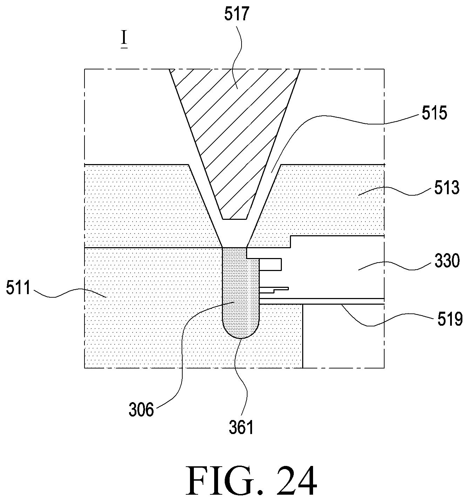

FIG. 22 is a view illustrating a configuration of disposing a protection member (e.g., the protection member 306 of FIG. 2, 3, or 4) on a display (e.g., the display 230, 330, or 430 of FIG. 2, 3, 4, 20, and/or 21) of an electronic device (e.g., the electronic device 200, 300, or 400 of FIG. 2, 3, and/or 20) according to various embodiments of the disclosure. FIG. 23 is an enlarged view of portion 'I' of FIG. 22, illustrating an example of a first shape portion of a protection member 306. FIG. 24 is an enlarged view of portion 'I' of FIG. 22, illustrating an example of a second shape portion of a protection member 306.

In FIGS. 22 and 24, in the protection member 306, the 'first shape portion' may mean a portion where the cushioning protrusion 361 of FIG. 4 or 9 is not formed, and the 'second shape portion' may mean a portion in which the cushioning protrusion 361 of FIG. 4 or 9 is formed.

Referring to FIGS. 22 to 24, a first jig 511, a second jig 513, and/or a dispenser 517 may be used in forming or disposing the protection member 306 and, according to an embodiment, the protection member 306 may be formed or disposed with a peelable film 519 attached to the display 330. According to an embodiment, the display 330 may be disposed with the outer surface in contact with the first jig 511 and, as the display 330 is disposed on the first jig 511, a molding space (the space where the protection member 306 is disposed in FIGS. 23 and 24) substantially corresponding to the shape of the protection member 306 may be formed. In another embodiment, the second jig 513 may be coupled with the first jig 511 while facing the outer surface of the display 330. The second jig 513 may include an injection groove 515 formed along at least a portion of the circumference of the display 330, and the injection groove 515 may form a path where a molten resin is injected into the molding space.

According to various embodiments, the dispenser 517 may be one for injecting a molten resin into the molding space, and the molten resin may include a polymer material, such as silicone or rubber. As the molten resin is cured into the shape corresponding to the molding space at least partially surrounded by the first jig 511 or the display 330, the protection member 306 may be formed. In an embodiment, the injection groove 515 may have a tapered shape whose width narrows closer to the molding space, and the tip of the dispenser 517 may have a shape corresponding to the shape of the injection groove 515. For example, the dispenser 517 may inject the molten resin through the injection groove 515 in a state of being disposed close to the molding space. While the molten resin is injected, the dispenser 517 may evenly inject the molten resin into the molding space while moving along the edge of the display 330.

According to various embodiments, the shape of the protection member 306 (e.g., the cross-sectional shape of FIG. 5 or 6 or the shape having the cap member 369 of FIG. 4 or 9) may be determined substantially by the first jig 511. For example, a groove deeper than the first shape portion in the position corresponding to the second shape portion may be formed and, depending on the shape of the first jig 511, a cushioning protrusion 361 may be formed in a portion of the protection member 306. The shape of the first jig 511 may be varied depending on the shape of the protection member 306 to be manufactured.

According to various embodiments, the peelable film 519 may temporarily be attached to the outer surface of the display 330 and prevent a portion of the molten resin or protection member 306 from being formed on the surface (e.g., outer surface) of the display 330 in an unintended area. For example, the peelable film 519 may be substantially attached to the outer surface of the display and, as the peelable film 519 is removed after the protection member 306 is formed, a portion of the protection member 306, formed in an undesigned area, may be removed. According to an embodiment, the peelable film 519 may have a smaller area than the outer surface of the display 330 in which case the protection member 306 may be formed on a portion of the outer surface of the display 330 as shown in FIG. 6.

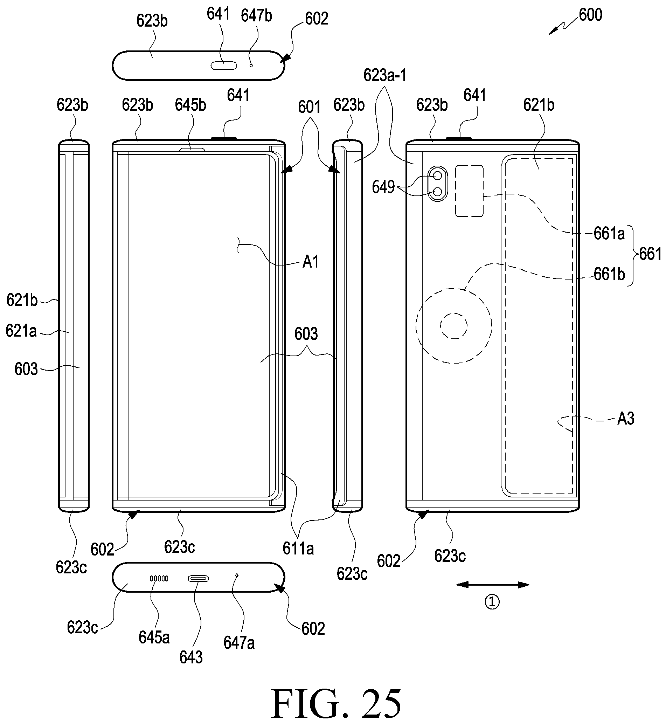

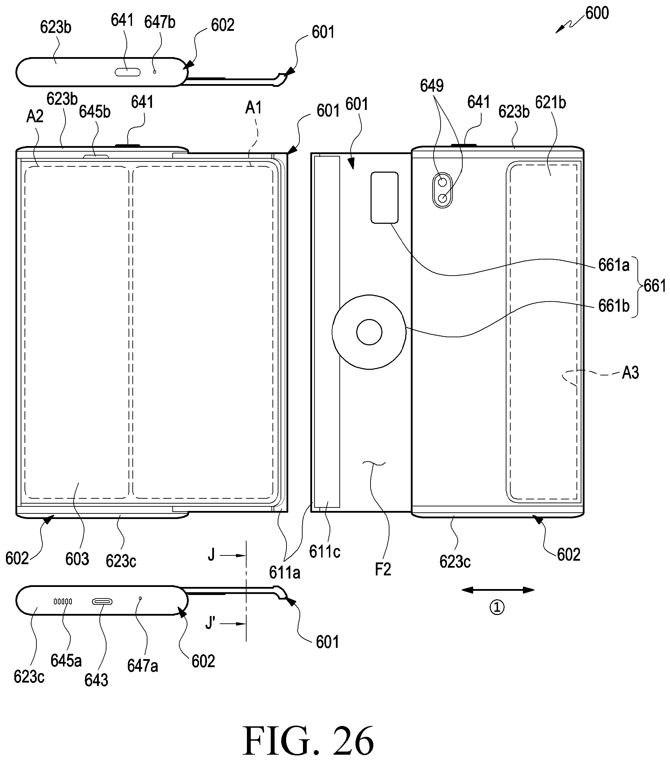

FIG. 25 is a view illustrating an electronic device 600 according to an embodiment, wherein a portion (e.g., the second area A2) of a flexible display 603 is received in a second structure 602 (e.g., first housing). FIG. 26 is a view illustrating an electronic device 600 according to an embodiment, wherein most of a flexible display 603 is visually exposed to the outside of a second structure 602.

The state shown in FIG. 25 may be defined as a first structure 601 (e.g., second housing) being closed with respect to a second structure 602, and the state shown in FIG. 26 may be defined as the first structure 601 being opened with respect to the second structure 602. According to an embodiment, the "closed state" or "opened state" may be defined as a closed or opened state of the electronic device. The electronic device 600 may include a first structure 601 and a second structure 602 movably disposed in the first structure 601. According to an embodiment, the electronic device 600 may be interpreted as having a structure in which the first structure 601 is slidably disposed on the second structure 602. According to an embodiment, the first structure 601 may be disposed to perform reciprocating motion between the closed state and the opened state in the shown direction with respect to the second structure 602, for example, a direction indicated by an arrow ①.

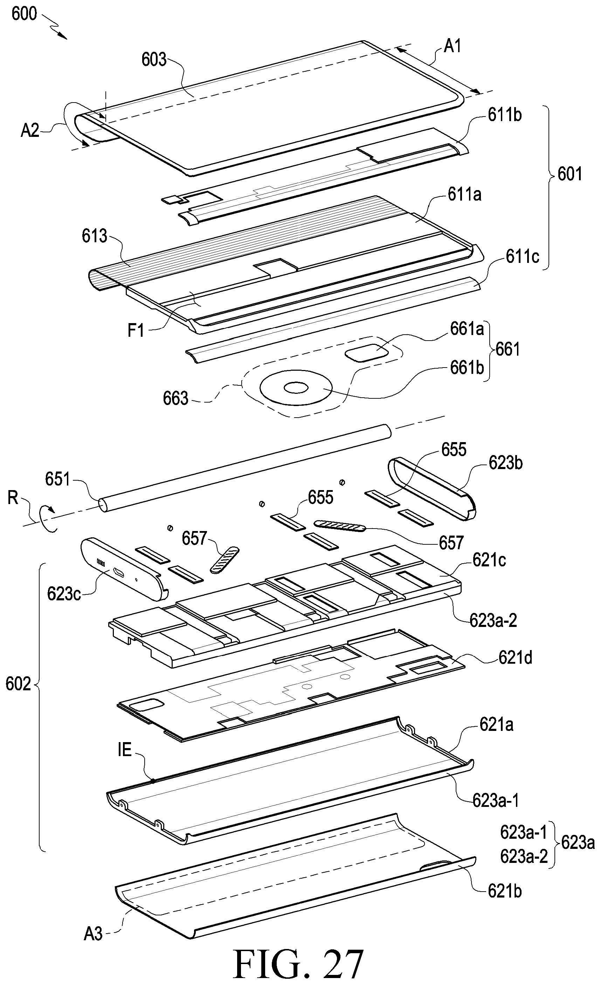

According to various embodiments, the first structure 601 may include a first plate 611a (e.g., a slide plate) and may include a first surface F1 (refer to FIG. 27) formed with at least a portion of the first plate 611a and a second surface F2 facing in a direction opposite to the first surface F1. According to an embodiment, the second structure 602 may include a second plate 621a (see FIG. 27) (e.g., a rear case), a first sidewall 623a extending from the second plate 621a, a second sidewall 623b extending from the first sidewall 623a and the second plate 621a, a third sidewall 623c extending from the first sidewall 623a and the second plate 621a and parallel to the second sidewall 623b and/or a rear plate 621b (e.g., a rear window). According to an embodiment, the second sidewall 623b and the third sidewall 623c may be formed to be perpendicular to the first sidewall 623a. According to an embodiment, the second plate 621a, the first sidewall 623a, the second sidewall 623b, and the third sidewall 623c may be formed to have an opening (e.g., in the front face) to receive (or surround) at least a portion of the first structure 601. For example, the first structure 601 may be coupled to the second structure 602 in a state in which it is at least partially surrounded, and the first structure 601 may be slid in a direction parallel to the first surface F1 or the second surface F2, for example, direction ① indicated with the arrow while being guided by the second structure 602.

According to various embodiments, the second sidewall 623b or the third sidewall 623c may be omitted. According to an embodiment, the second plate 621a, the first sidewall 623a, the second sidewall 623b, and/or the third sidewall 623c may be formed as separate structures and may be combined or assembled. The rear plate 621b may be coupled to surround at least a portion of the second plate 621a. In an embodiment, the rear plate 621b may be formed substantially integrally with the second plate 621a. According to an embodiment, the second plate 621a or the rear plate 621b may cover at least a portion of the flexible display 603. For example, the flexible display 603 may be at least partially received inside the second structure 602, and the second plate 621a or the rear plate 621b may cover a portion (e.g., the second area A2) of the flexible display 603 received inside the second structure 602.

According to various embodiments, the first structure 601 may be moved to the opened state or closed state with respect to the second structure 602 in a first direction (e.g., direction ①) parallel with the second plate 621a (e.g., the rear case) and the second sidewall 623b to be positioned a first distance away from the first sidewall 623a (e.g., a first sidewall portion 623a-1) in the closed state and be positioned a second distance away from the first side wall 623a (e.g., a first sidewall portion 623a-1) in the opened state, wherein the second distance is larger than the first distance. In an embodiment, when in the closed state, the first structure 601 may be positioned to surround a portion of the first sidewall 623a (e.g., the first sidewall portion 623a-1).

According to various embodiments, the electronic device 600 may include a display 603, a key input device 641, a connector hole 643, audio modules 645a, 645b, 647a, and 647b, or a camera module 649. Although not shown, the electronic device 600 may further include an indicator (e.g., a light emitting diode (LED) device) or various sensor modules.

According to various embodiments, the display 603 may include a first area A1 and a second area A2. In an embodiment, the first area A1 may extend substantially across at least a portion of the first surface F1 and may be disposed on the first surface F1. The second area A2 may extend from the first area A1, and may be inserted or received inside the second structure 602 (e.g., housing) or visually exposed to the outside of the structure 602 according to a slide of the first structure 601. As will be described below, the second area A2 may be moved while being substantially guided by a roller 651 (refer to FIG. 27) mounted on the second structure 602 and may thus be received into the inside of or visually exposed to the outside of the second structure 602. For example, while the first structure 601 slides, a portion of the second area A2 may be deformed into a curved shape in a position corresponding to the roller 651.

According to various embodiments, when viewed from the top of the first plate 611a (e.g., slide plate), when the first structure 601 moves from the closed state to the opened state, the second area A2 may be gradually visually exposed to the outside of the second structure 602 to be substantially coplanar with the first area A1. The display 603 may be disposed to be coupled with, or adjacent, a touch detecting circuit, a pressure sensor capable of measuring the strength (pressure) of touches, and/or a digitizer for detecting a magnetic field-type stylus pen. In an embodiment, the second area A2 may be at least partially received inside the second structure 602, and a portion of the second area A2 may be visually exposed to the outside even in the state shown in FIG. 25 (e.g., the closed state). In an embodiment, irrespective of the closed state or the opened state, the visually exposed portion of the second area A2 may be positioned on the roller 651 and, in a position corresponding to the roller 651, a portion of the second area A2 may maintain the curved shape.

The key input device 641 may be disposed on the second sidewall 623b or the third sidewall 623c of the second structure 602. Considering the appearance and the state of use, the electronic device 600 may be manufactured to omit the illustrated key input device 641 or to include additional key input device(s). According to an embodiment, the electronic device 600 may include a key input device (not shown), e.g., a home key or a touchpad disposed around the home key. According to another embodiment, at least a portion of the key input device 641 may be positioned on an area of the first structure 601.

According to various embodiments, the connector hole 643 may be omitted or may receive a connector (e.g., a universal serial bus (USB) connector) for transmitting and receiving power and/or data with an external electronic device. Although not shown, the electronic device 600 may include a plurality of connector holes 643, and some of the plurality of connector holes 643 may function as connector holes for transmitting/receiving audio signals with an external electronic device. It should be noted that in the illustrated embodiment, the connector hole 643 is disposed in the third sidewall 623c, but the present invention is not limited thereto. For example, the connector hole 643 or an additional connector hole not shown may be disposed in the first sidewall 623a or the second sidewall 623b.

According to various embodiments, the audio modules 645a, 645b, 647a, and 647b may include speaker holes 645a and 645b or microphone holes 647a and 647b. One of the speaker holes 645a and 645b may be provided as a receiver hole for voice calls, and the other may be provided as an external speaker hole. The microphone holes 647a and 647b may have a microphone inside to obtain external sounds. According to an embodiment, there may be a plurality of microphones to be able to detect the direction of a sound. **In** an embodiment, the speaker holes 645a and 645b and the microphone holes 647a and 647b may be implemented as one hole, or a speaker may be included without the speaker holes 645a and 645b (e.g., a piezo speaker). According to, the speaker hole indicated by the reference number "645b" may be disposed in the first structure 601 and used as a receiver hole for voice calls, and the speaker hole indicated by the reference number "645a" (e.g., an external speaker hole) or the microphone holes 647a and 647b may be disposed in the second structure 602 (e.g., one of the sidewalls 623a, 623b, and 623c).

The camera module 649 may be provided on the second structure 602 and may capture a subject in a direction opposite to the first area A1 of the display 603. The electronic device 600 may include a plurality of camera modules 649. For example, the electronic device 600 may include a wide-angle camera, a telephoto camera, or a close-up camera, and according to an embodiment, by including an infrared projector and/or an infrared receiver, the electronic device 600 may measure the distance to the subject. The camera module 649 may include one or more lenses, an image sensor, and/or an image signal processor. Although not shown, the electronic device 600 may further include a camera module (e.g., a front camera) that captures the subject in the same direction as the first area A1 of the display 603. For example, the front camera may be disposed around the first area A1 or in an area overlapping the display 603 and, when disposed in the area overlapping the display 603, the front camera may capture the subject via the display 603.

According to various embodiments, an indicator (not shown) of the electronic device 600 may be disposed on the first structure 601 or the second structure 602, and the indicator may include a light emitting diode to provide state information about the electronic device 600 as a visual signal. The sensor module (not shown) of the electronic device 600 may produce an electrical signal or data value corresponding to the internal operation state or external environment state of the electronic device 600. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 27 is an exploded perspective view illustrating an electronic device (e.g., the electronic device 600 of FIG. 25 or 26) according to various embodiments of the disclosure.

Referring to FIG. 27, the electronic device 600 may include a first structure 601, a second structure 602, a display 603 (e.g., a flexible display), a guide member (e.g., the roller 651), a multi-bar structure 613, and/or at least one antenna structure 661. A portion (e.g., the second area A2) of the display 603 may be received in the second structure 602 while being guided by the roller 651.

According to various embodiments, the first structure 601 may include a first plate 611a (e.g., a slide plate), a first bracket 611b and/or a second bracket 611c mounted on the first plate 611a. The first structure 601, for example, the first plate 611a, the first bracket 611b, and/or the second bracket 611c may be formed of a metallic material and/or a non-metallic (e.g., polymer) material. The first plate 611a may be mounted on the second structure 602 (e.g., the housing) and may be linearly reciprocated in one direction (e.g., in the direction ① indicated with the arrow in FIG. 25) while being guided by the second structure 602. In an embodiment, the first bracket 611b may be coupled with the first plate 611a to, together with the first plate 611a, form the first surface F1 of the first structure 601. The first area A1 of the display 603 may be substantially mounted on the first surface F1 and remain in a flat plate shape. The second bracket 611c may be coupled to the first plate 611a to, together with the first plate 611a, form the second surface F2 of the first structure 601. According to an embodiment, the first bracket 611b and/or the second bracket 611c may be integrally formed with the first plate 611a. This may be appropriately designed in consideration of the assembly structure or manufacturing process of the product to be manufactured. The first structure 601 or the first plate 611a may be coupled with the second structure 602 and slide with respect to the second structure 602.

According to various embodiments, the multi-bar structure 613 may include a plurality of rods or bars extending in a straight line and disposed parallel to the rotation axis R of the roller 651. The plurality of rods or bars may be arranged along a direction perpendicular to the rotation axis R, e.g., along a direction in which the first structure 601 slides. In an embodiment, the multi-bar structure 613 is connected with one end of the first structure 601 to be able to move with respect to the second structure 602 according to the slide of the first structure 601. For example, in the closed state (e.g., the state illustrated in FIG. 25), the multi-bar structure 613 may be substantially received into the inside of the second structure 602 and, in the opened state (e.g., the state illustrated in FIG. 2), the multi-bar structure 613 may be extracted to the outside of the second structure 602. In an embodiment, even in the closed state, a portion of the multi-bar structure 613 may not be received inside the second structure 602. For example, even in the closed state, a portion of the multi-bar structure 613 may be positioned to correspond to the roller 651 outside the second structure 602.

According to various embodiments, the rods or bars of the multi-bar structure 613 may orbit around other adjacent rods or bars while remaining parallel to the other adjacent rods or bars. Thus, as the first structure 601 slides, a portion of the multi-bar structure 613, which faces the roller 651, may form a curved surface, and another portion of the multi-bar structure 613, which does not face the roller 651, may form a flat surface. In an embodiment, the second area A2 of the display 603 may be mounted or supported on the multi-bar structure 613 and, in the opened state (e.g., the state shown in FIG. 26), the second area A2, along with the first area A1, may be visually exposed to the outside of the second structure 602. In the state in which the second area A2 is visually exposed to the outside of the second structure 602, the multi-bar structure 613 may substantially form a flat surface, thereby supporting or maintaining the second area A2 in the flat state.

According to various embodiments, the second structure 602 (e.g., the housing) may include a second plate 621a (e.g., the rear case), a rear plate 621b, a third plate 621c (e.g., the front case), and a printed circuit board 621d. In an embodiment, the electronic device 600 may further include a supporting member (not shown). The supporting member may, e.g., separate a gap or space in which a portion of the display 603 is received from a space in which the printed circuit board 621d is disposed. The second plate 621a, e.g., the rear case, may be disposed to face in a direction opposite to the first surface F1 of the first plate 611a, and the second plate 121a may substantially form the external shape of the second structure 602 or the electronic device 600. In an embodiment, the second structure 602 may include a first sidewall 623a extending from the second plate 621a, a second sidewall 623b extending from the second plate 621a and substantially perpendicular to the first sidewall 623a, and a third sidewall 623c extending from the second plate 621a, substantially perpendicular to the first sidewall 623a and parallel to the second sidewall 623b. In the illustrated embodiment, the second sidewall 623b and the third sidewall 623c are manufactured as separate components from the second plate 621a and are mounted or assembled on the second plate 621a. However, the second sidewall 623b and the third sidewall 623c may alternatively be integrally formed with the second plate 621a.

According to various embodiments, the rear plate 621b may be coupled to the outer surface of the second plate 621a and, according to an embodiment, the rear plate 621b may be manufactured integrally with the second plate 621a. In an embodiment, the second plate 621a may be formed of a metal or polymer, and the rear plate 621b may be formed of a material such as metal, glass, synthetic resin, or ceramic to decorate the exterior of the electronic device 600. According to an embodiment, the second plate 621a and/or the rear plate 621b may be formed of a material that transmits light at least partially (e.g., the auxiliary display area A3). In an embodiment, in a state in which a portion (e.g., the second area A2) of the display 603 is received into the inside of the second structure 602, at least a portion of the second area A2 may be positioned corresponding to the auxiliary display area A3. For example, in a state of being received inside the second structure 602, the display 603 may output a screen using at least a portion of the second area A2, and the user may recognize the screen output through the auxiliary display area A3.

According to various embodiments, the third plate 621c may be formed of a metal or polymer, and the third plate 621c may be coupled with the second plate 621a (e.g., rear case), the first sidewall 623a, the second sidewall 623b, and/or the third sidewall 623c to form an internal space of the second structure 602. According to an embodiment, the third plate 621c may be referred to as a "front case", and the first structure 601, e.g., the first plate 611a, may be slid while substantially facing the third plate 621c. In an embodiment, the first sidewall 623a may be formed of a combination of a first sidewall portion 623a-1 extending from the second plate 621a and a second sidewall portion 623a-2 formed at an edge of the third plate 621c. According to another embodiment, the first sidewall portion 623a-1 may be coupled to surround an edge of the third plate 621c, e.g., the second sidewall portion 623a-2. In this case, the first sidewall portion 623a-1 itself may form the first sidewall 623a.

According to various embodiments, the supporting member not shown may be disposed in a space between the second plate 621a and the third plate 621c, and may have a flat plate shape formed of a metal or polymer. The supporting member may provide an electromagnetic shielding structure in the internal space of the second structure 602 or may increase mechanical rigidity of the second structure 602. In an embodiment, when received into the inside of the second structure 602, a partial area (e.g., the second area A2) of the multi-bar structure 613 and/or the display 603 may be positioned in a space between the second plate 621a and the supporting member.

According to various embodiments, the printed circuit board 621d may be disposed in a space between the third plate 621c and the supporting member. For example, the printed circuit board 621d may be received in a space separated from the space where a partial area of the display 603 and/or the multi-bar structure 613 is received by the supporting member (not shown) inside the second structure 602. A processor, memory, and/or interface may be mounted on the printed circuit board 621d. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 600 with an external electronic device and may include a USB connector, an SD card/multimedia card (MMC) connector, or an audio connector.

According to various embodiments, the display 603 may be an organic light emitting diode-based flexible display, and the display 103 may normally remain in the flat shape and may be at least partially deformed into a curved shape. In an embodiment, the first area A1 of the display 603 may be mounted or attached to the first surface F1 of the first structure 601 and maintained in a substantially flat shape. The second area A2 may extend from the first area A1 and may be supported or attached to the multi-bar structure 613. For example, the second area A2 may extend along the sliding direction of the first structure 601 and, along with the multi-bar structure 613, may be received in the second structure 602. As the multi-bar structure 613 is deformed, the second area A2 may be at least partially deformed into a curved shape. In an embodiment, even in the received state, a portion of the second area A2 may be visually exposed to the external space.

According to various embodiments, as the first structure 601 slides on the second structure 602, the area of the display 603 visually exposed to the outside may vary. The electronic device 600 (e.g., processor) may change the area of the display 603 that is activated based on the area of the display 603 that is visually exposed to the outside. For example, in the opened state or in an intermediate position between the closed state and the opened state, the electronic device 600 may activate a partial area visually exposed to the outside of the second structure 602 of the entire area of the display 603. In the closed state, the electronic device 600 may activate the first area A1 of the display 603 and deactivate the second area A2. In the closed state, when there is no user input for a certain period of time (e.g., 30 seconds or 2 minutes), the electronic device 600 may deactivate the entire area of the display 603. In an embodiment, in a state in which the entire area of the display 603 is inactivated, the electronic device 600 may activate a partial area of the display 603 to provide visual information, as necessary (e.g., a notification according to the user setting, a missed call/message arrival notification), through the auxiliary display area A3.

According to various embodiments, in the opened state (e.g., the state shown in FIG. 26), the entire area (e.g., the first area A1 and the second area A2) of the display 603 may be substantially visually exposed to the outside, and the first area A1 and the second area A2 may be arranged to form a plane. In an embodiment, even in the opened state, a portion (e.g., one end) of the second area A2 may be positioned corresponding to the roller 651, and the portion of the second area A2, which corresponds to the roller 651 may remain in the curved shape. For example, according to various embodiments of the disclosure, despite the phrase "the second area A2 is disposed to form a plane in the opened state," a portion of the second area A2 may remain in the curved shape. Likewise, although it is stated that "in the closed state, the multi-bar structure 613 and/or the second area A2 are received inside the second structure 602," a portion of the second area A2 of the multi-bar structure 613 may be positioned outside the second structure 602.

According to an embodiment, the guide member, e.g., the roller 651, may be rotatably mounted on the second structure 602 in a position adjacent to an edge of the second structure 602 (e.g., the second plate 621a). For example, the roller 651 may be disposed adjacent to an edge of the second plate 621a parallel to the first side wall 623a. Here, "may be disposed adjacent" may mean that they are spaced apart from each other by 5mm or less. For example, the roller 651 may be disposed 5mm or less apart from an edge of the second plate 621a parallel to the first side wall 623a. Although no reference denotation is assigned in the drawings, another sidewall may extend from the edge of the second plate 621a adjacent to the roller 651, and the sidewall adjacent to the roller 651 may be substantially parallel to the first sidewall 623a. According to an embodiment, the sidewall of the second structure 602 adjacent to the roller 651 may be formed of a material that transmits light, and a portion of the second area A2 may provide visual information via the portion of the second structure 602 while being received in the second structure 602.

According to various embodiments, an end of the roller 651 may be rotatably coupled to the second sidewall 623b, and the other end thereof may be rotatably coupled to the third sidewall 623c. For example, the roller 651 may be mounted on the second structure 602, rotating about the rotation axis R perpendicular to the sliding direction (e.g., direction ① indicated with the arrow in FIG. 25 or 26) of the first structure 601. The rotation axis R may be disposed substantially parallel to the first side wall 623a, and may be positioned away from the first side wall 623a, for example, at one edge of the second plate 621a. In an embodiment, the gap formed between the outer circumferential surface of the roller 651 and the inner surface of the edge of the second plate 621a may form an entrance through which the multi-bar structure 613 or display 603 enters the second structure 602.

According to various embodiments, when the display 603 is deformed into a curved shape, the roller 651 maintains a radius of curvature of the display 603 to a certain degree, thereby suppressing excessive deformation of the display 603. The term "excessive deformation" may mean that the display 603 is deformed to have a radius of curvature that is too small, resulting in damage to pixels or signal lines included in the flexible display 203. For example, the display 603 may be moved or deformed while being guided by the roller 651 and may be protected from damage due to excessive deformation. In an embodiment, the roller 651 may rotate while the multi-bar structure 613 or the display 603 is inserted into or extracted from the second structure 602. For example, as the roller 651 rotates, the friction between the multi-bar structure 613 (or display 203) and the second structure 602 may be suppressed or prevented, allowing the multi-bar structure 613 (or display 603) to smooth the insertion/extraction of the second structure 602.

According to various embodiments, the electronic device 600 may further include a guide rail(s) 655 and/or an actuating member(s) 657. The guide rail(s) 655 may be mounted on the second structure 602, e.g., the third plate 621c to guide a sliding of the first structure 601 (e.g., the first plate 611a or the slide plate). The actuating member(s) 657 may include a spring or a spring module that provides an elastic force in a direction along which two opposite ends thereof move away from each other, and a first end of the actuating member(s) 657 may be rotatably supported on the second structure 602, and a second end may be rotatably supported on the first structure 601.

According to various embodiments, when the first structure 601 slides, both the ends of the actuating member(s) 657 may be positioned closest to each other (hereinafter, a 'nearest point') at any one point between the closed state and the opened state. For example, in the interval between the nearest point and the closed state, the actuating member(s) 657 may provide an elastic force to the first structure 101 in a direction toward the closed state and, in the interval between the nearest point and the opened state, the actuating member(s) 657 may provide an elastic force to the first structure 101 in a direction toward the opened state.

According to various embodiments, the antenna structure 661 may be disposed on at least one, e.g., the first structure 601, of the first structure 601 or the second structure 602. In an embodiment of being disposed on the first structure 601, the antenna structure 661 may be selectively exposed to the outside space. For example, the antenna structure 661 may be disposed and concealed between the first structure 601 and the second structure 602 in a closed state and be exposed to the outside space in the opened state. The antenna structure 661 may include a loop antenna formed of an array of electrically conductive bodies, e.g., electrically conductive lines, on a flat surface or flat plate. In an embodiment, the antenna structure 661 may include a patch antenna, a monopole antenna, a dipole antenna, or an inverted F-antenna depending on the arrangement or shape of the conductive bodies. The antenna structure may be configured to perform at least one of, e.g., near field communication, wireless power transmission/reception, and magnetic secure transmission (MST). However, it should be noted that wireless communication through the antenna structure 661 is not limited thereto. For example, the electronic device 600 may access a mobile or cellular communication network, a local area network (LAN), a wireless local area network (WLAN), a wide area network (WAN), the Internet, or a small area network (SAN), using the antenna structure 661. According to an embodiment, the antenna structure 661 may include a first antenna 661a for magnetic secure transmission (MST) and a second antenna 661b for near field communication and/or wireless power transmission. In an embodiment, the first antenna 661a may be configured to perform near field communication and/or wireless charging. The second antenna 661b may be utilized for magnetic secure transmission.

According to various embodiments, the antenna structure 661, e.g., the first antenna 661a and/or the second antenna 661b, may be provided on an attachment sheet 663 and disposed on the first structure 601. For example, in a state where the first antenna 661a and the second antenna 661b are disposed on the attachment sheet 663, the attachment sheet 663 may be attached to the first structure 601 (e.g., the second surface A2). According to an embodiment, the antenna structure 661 may be disposed to substantially overlap the first area A1. In an embodiment, although the first antenna 661a and the second antenna 661b are shown, in an actual product, the antenna structure 661 may be concealed not to be visually recognized by the user.

According to various embodiments, in a configuration in which the antenna structure 661 is disposed in the first structure 601, if the second area A2 is received in the second structure 602, the antenna structure 661 may be at least partially positioned between the first area A1 and the second area A2. For example, in the closed state of FIG. 25, the antenna structure 661 may be positioned to face the second structure 602 (e.g., the third plate 621c). In the closed state, when viewed through the front surface or rear surface of the electronic device 600, the entire antenna structure 661 may substantially overlap the first area A1, and at least a portion of the antenna structure 661 may overlap the second area A2.

According to various embodiments, in a configuration in which the antenna structure 661 is disposed in the first structure 601, the antenna structure 661 may be positioned not to face the second structure 602, with the second area A2 visually exposed to the outside of the second structure 602. For example, in the opened state of FIG. 26, the antenna structure 661 may be substantially exposed to the outside space. In this embodiment, a configuration in which the antenna structure 661 is disposed in the first structure 601 is described, but as mentioned above, the antenna structure 661 may be disposed in the second structure 602, or an additional antenna structure (not shown) may be disposed in the second structure 602.

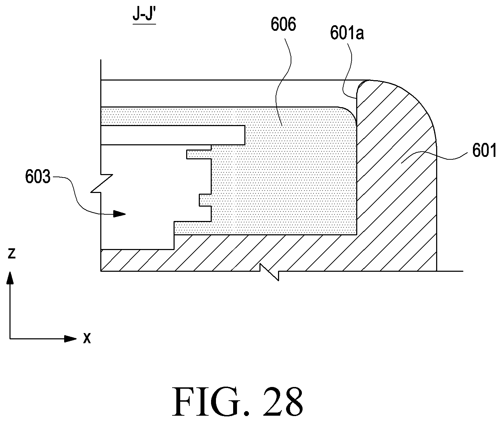

FIG. 28 is a cross-sectional view illustrating a first structure 601, taken along line J-J' of FIG. 26.

Referring to FIG. 28, according to various embodiments of the disclosure, in the electronic device 600, the protection member 606 may be disposed between the edge of the display 603 and the inner wall 601a of the first structure 601 to prevent direct contact between the edge of the display 603 and the first structure 601. In an embodiment, when the first structure 601 is moved with respect to the second structure 602, a portion of the second area A2 may be transformed between a flat shape and a curved shape and, according to the transformation, a relative displacement may occur between the layers of the display 603.

According to various embodiments, the protection member 606 may be formed on the edge of the display 603 in a section parallel to the direction in which the first structure 601 moves (e.g., the direction of arrow ① in FIG. 1 or 2) and may not be formed in a section crossing or substantially perpendicular to the direction in which the first structure 601 moves. For example, the electronic device 600 may protect the display 603 by including the protection member 606 disposed in a partial section of the edge of the display 603 but, as the protection member 606 is not disposed in the section perpendicular to the moving direction of the first structure 601 in the edge of the display 603, a relative displacement may be allowed between the layers of the display 603.

According to various embodiments, similar to the protection member 306 of FIG. 4, the edge of the display 603 in the section where the protection member 606 is not disposed may be disposed to directly face the inner wall of the housing (e.g., the first structure 601 or the second structure 602). In an embodiment, in any structure in which the first area A1 is disposed in the first structure 601, and the flat shape remains although the first structure 601 slides, the protection member 606 may be formed on the entire edge of the display 603 along the circumference of the first area A1. In another embodiment, in any structure in which the second area A2 is transformed between a curved shape and a flat shape while moving on the second structure 602, the protection member 606 may be disposed along the circumference of the second area in the section parallel to the moving direction of the first structure 601 but may not be formed along the circumference of the second area A2 in the section (e.g., the left edge of the second area A2 of FIG. 26) perpendicular to the moving direction of the first structure 601. In an embodiment, regardless of the movement of the first structure 601, the area where the protection member 606 is not disposed in the edge of the display 603 may substantially remain in the state received in another structure (e.g., the second structure 602).

According to various embodiments of the disclosure, an electronic device (e.g., the electronic device 101, 200, 300, 400, or 600 of FIG. 1, 2, 3, 20, and/or 25 to 27) may comprise a first housing (e.g., the first housing 220 or 321 of FIG. 2, 3, or 20), a second housing (e.g., the second housing 220 or 322 of FIG. 2, 3, or 20) configured to pivot between a first position where the second housing is disposed to face the first housing and a second position (e.g., the state shown in FIG. 2) unfolded by a designated angle from the first position, at least one hinge module (e.g., the hinge structure 340 of FIG. 3) providing a folding axis (e.g., the folding axis A of FIG. 2 or 4) and disposed between the first housing and the second housing to pivotably couple the first housing and the second housing, a flexible display (e.g., the display 230 or 330 of FIGS. 2 to 9) including a first area (e.g., the first area 231a of FIG. 2) disposed on the first housing, a second area (e.g., the second area 231b of FIG. 2) disposed on the second housing, and a folding area (e.g., the folding area 231c of FIG. 2) disposed corresponding to an area disposed on the hinge module to connect the first area and the second area, and a protection member (e.g., the protection member 306 of FIGS. 2 to 6 and/or 8 and 9) disposed on at least a portion of a circumference of the flexible display. The protection member may be at least partially disposed between an edge of the flexible display and an inner wall (e.g., the inner wall 321a of FIG. 10) of the first housing or between the edge of the flexible display and an inner wall of the second housing.

According to various embodiments, the protection member may include a cushioning protrusion (e.g., the cushioning protrusion 361 of FIG. 4 or 9) formed to protrude from one surface of one of the first housing or the second housing at a designated distance from the folding axis. In the first position, the cushioning protrusion may be configured to contact the other one of the first housing or the second housing.

According to various embodiments, the edge of the flexible display may include first sections (e.g., the first sections S1 of FIG. 4) disposed parallel to the folding axis, second sections (e.g., the second sections S2 of FIG. 4) disposed to cross the folding axis, and curved sections (e.g., the curved sections S3 of FIG. 4) connecting the first sections and the second sections. The protection member may be disposed on at least a portion of the curved section and the second section.

According to various embodiments, the first sections may be disposed to directly face the inner wall of the first housing or the inner wall of the second housing (e.g., refer to FIGS. 11 to 14).

According to various embodiments, the electronic device may further comprise at least one sound hole (e.g., the first sound hole 245b of FIG. 12) formed in the first housing. The first sections may be disposed to directly face the inner wall of the first housing or the inner wall of the second housing. The sound hole may be exposed to an outside through a gap (e.g., the first gap g1 of FIG. 11 or 12) between one of the first sections and the inner wall of the first housing.

According to various embodiments, the electronic device may further comprise at least one ornamental cover (e.g., the ornamental cover(s) 319 and 329 of FIGS. 2, 3, 7 to 9 and/or 11 to 14) disposed on the first housing or the second housing in a position corresponding to at least the first section. The ornamental cover may be configured to cover a portion (e.g., the portion indicated by '330c' or '330d' of FIGS. 15 and 16) of the flexible display.

According to various embodiments, the electronic device may further comprise at least one ornamental cover (e.g., the ornamental cover(s) 319 and 329 of FIGS. 2, 3, 7 to 9 and/or 11 to 14) disposed on the first housing or the second housing in a position corresponding to at least the first section. The first sections may be disposed to directly face the inner wall of the first housing or the inner wall of the second housing. The ornamental cover may be configured to hide a gap (e.g., the first gap g1 of FIG. 11 or 12) between any one of the first sections and the inner wall of the first housing or a gap (e.g., the second gap g2 of FIG. 13 or 14) between another one of the first sections and the inner wall of the second housing.

According to various embodiments, the electronic device may further comprise at least one ornamental cover (e.g., the ornamental cover(s) 319 and 329 of FIGS. 2, 3, 7 to 9 and/or 11 to 14) disposed on the first housing or the second housing in a position corresponding to at least the first section and at least one sound hole (e.g., the first sound hole 245b of FIG. 12) formed in the first housing. The ornamental cover may be disposed to face the sound hole through a gap (e.g., the first gap g1 of FIG. 11 or 12) between one of the first sections and the inner wall of the first housing.

According to various embodiments, the electronic device may further comprise at least one ornamental cover disposed on the first housing or the second housing in a position corresponding to at least the first section. The ornamental cover may be configured to come in point contact or line contact with an end of the protection member (e.g., FIG. 17 or 18).

According to various embodiments, the electronic device may further comprise a hinge cover (e.g., the hinge cover 360 of FIG. 3) disposed between the first housing and the second housing. The hinge cover may be configured to receive at least a portion of the hinge module.

According to various embodiments, the protection member may be configured to at least partially hide a gap (e.g., the third gap g3 of FIG. 19) between a portion of the edge of the flexible display and the hinge cover.

According to various embodiments, the hinge cover may further include cap members (e.g., the cap member 369 of FIG. 7 or 19) disposed on two opposite ends of the hinge cover on the folding axis to be adjacent to the edge of the flexible display. The protection member may be configured to at least partially hide a gap between a portion of the edge of the flexible display and the cam member.

According to various embodiments, the protection member may be formed to at least partially cover a surface of the flexible display on the edge of the flexible display (e.g., refer to FIG. 6).

According to various embodiments of the disclosure, an electronic device (e.g., the electronic device 100, 200, 300, 400, or 600 of FIGS. 1, 2, 3, 20, and/or 25 to 27) may comprise a first housing (e.g., the first housing 220 or 321 of FIG. 2, 3, or 20), a second housing (e.g., the second housing 220 or 322 of FIG. 2, 3, or 20) configured to pivot between a first position where the second housing is disposed to face the first housing and a second position unfolded by a designated angle from the first position, at least one hinge module (e.g., the hinge structure 340 of FIG. 3) providing a folding axis (e.g., the folding axis A of FIG. 2 or 4) and disposed between the first housing and the second housing to pivotably couple the first housing and the second housing, a flexible display (e.g., the display 230 or 330 of FIGS. 2 to 9) disposed from the first housing through an area where the hinge module is disposed to the second housing, and a protection member (e.g., the protection member 306 of FIGS. 2 to 6 and/or 8 and 9) disposed to surround at least a portion of an edge of the flexible display. The portion of the edge of the flexible display may be disposed to face an inner wall of the first housing or an inner wall of the second housing with the protection member disposed therebetween. Another portion of the edge of the flexible display may be disposed to directly face the inner wall (e.g., the inner wall 321a of FIG. 11) of the first housing or the inner wall (e.g., the inner wall 322a of FIG. 13) of the second housing.

According to various embodiments, the protection member may include a cushioning protrusion (e.g., the cushioning protrusion 361 of FIG. 4 or 9) formed to protrude from one surface of one of the first housing or the second housing at a designated distance from the folding axis. In the first position, the cushioning protrusion may be configured to contact the other one of the first housing or the second housing.

According to various embodiments, the edge of the flexible display may include first sections (e.g., the first sections S1 of FIG. 4) disposed parallel to the folding axis, second sections (e.g., the second sections S2 of FIG. 4) disposed to cross the folding axis, and curved sections (e.g., the curved sections S3 of FIG. 4) connecting the first sections and the second sections. The protection member may be disposed on at least a portion of the curved section and the second section.

According to various embodiments, the electronic device may further comprise at least one sound hole (e.g., the first sound hole 245b of FIG. 12) formed in the first housing. The sound hole may be exposed to an outside through a gap (e.g., the first gap g1 of FIG. 11 or 12) between one of the first sections and the inner wall of the first housing.

According to various embodiments, the electronic device may further comprise a flexible printed circuit board (e.g., the flexible printed circuit board 339 of FIG. 4 or 13) extending from the flexible display. The flexible printed circuit board may be at least partially disposed between an inner surface of the flexible display and one surface of the second housing through a gap (e.g., the second gap g2 of FIG. 13) between another one of the first sections and the inner wall (e.g., the inner wall 322a of FIG. 13) of the second housing.

According to various embodiments, the electronic device may further comprise at least one ornamental cover (e.g., the ornamental cover(s) 319 and 329 of FIGS. 2, 3, 7 to 9 and/or 11 to 14) disposed on the first housing or the second housing in a position corresponding to at least the first section. The ornamental cover may be configured to hide a gap between any one of the first sections and the inner wall of the first housing or a gap between another one of the first sections and the inner wall of the second housing.

According to various embodiments, the electronic device may further comprise at least one sound hole formed in the first housing. The sound hole may be disposed to directly face the ornamental cover through a gap between any one of the first sections and the inner wall of the first housing.

While the disclosure has been described and shown in connection with various embodiments, it should be appreciated that various embodiments are not intended as limiting the invention but merely as illustrative embodiments. It will be apparent to one of ordinary skill in the art that various changes may be made in form and detail without departing from the overall scope of the disclosure, including the appended claims and their equivalents. For example, in the configuration exemplified in the above-described embodiments, only a relative displacement occurs in the display panel and the thin film plate during folding or unfolding without a change in the actual lengths of the display panel and the thin film plate. However, various embodiments of the disclosure may not be limited thereto. For example, the protection member may be formed on the entire edge of the display as long as the length, area, or volume of the display panel or thin film plate may be varied during folding or unfolding.

## Claims

1. An electronic device, comprising:
a first housing (210, 321);
a second housing (220, 322) configured to pivot between a first position where the second housing (220, 322) is disposed to face the first housing (210, 321) and a second position unfolded by a designated angle from the first position;
at least one hinge module (340) providing a folding axis and disposed between the first housing (210, 321) and the second housing (220, 322) to pivotably couple the first housing (210, 321) and the second housing (220, 322);
a flexible display (230, 330, 603) including a first area (231a) disposed on the first housing (210, 321), a second area (231b) disposed on the second housing (220, 322), and a folding area disposed corresponding to an area disposed on the hinge module (340) to connect the first area (231a) and the second area (231b); and
a protection member (206, 306) disposed on at least a portion of an edge of the flexible display (230, 330, 603),
**characterised in that**:
the protection member (206, 306) is formed on at least a portion of a curved section of the edge of the flexible display (230, 330, 603) and disposed to substantially contact an inner wall of the first housing (210, 321) or an inner wall of the second housing (220, 322) such that the protection member (206, 306) is configured to guide an assembly position of the display on the first housing (210, 321) or the second housing (220, 322).

2. The electronic device of claim 1, wherein the protection member (206, 306) includes a cushioning protrusion (361) formed to protrude to one surface of one of the first housing (210, 321) and the second housing (220, 322) at a designated distance from the folding axis, and
wherein in the first position, the cushioning protrusion (361) is configured to contact the other one of the first housing (210, 321) and the second housing (220, 322).

3. The electronic device of claim 1, wherein the edge of the flexible display (230, 330, 603) includes:
first sections (S1) disposed parallel to the folding axis;
second sections (S2) disposed to cross the folding axis; and
curved sections (S3) connecting the first sections (S1) and the second sections (S2), and
wherein the protection member (206, 306) is further disposed on at least a portion of the second section (S2).

4. The electronic device of claim 3, wherein the first sections (S1) are disposed to directly face the inner wall of the first housing (210, 321) or the inner wall of the second housing (220, 322).

5. The electronic device of claim 3, further comprising at least one sound hole (245b, 245c) formed in the first housing (210, 321),
wherein the first sections (S1) are disposed to directly face the inner wall of the first housing (210, 321) or the inner wall of the second housing (220, 322), and wherein the sound hole (245b, 245c) is exposed to an outside through a gap between one of the first sections (S1) and the inner wall of the first housing (210, 321).

6. The electronic device of claim 3, further comprising at least one ornamental cover (219, 229, 319, 329) disposed on the first housing (210, 321) or the second housing (220, 322) in a position corresponding to at least the first section,
wherein the ornamental cover (219, 229, 319, 329) is configured to cover a portion of the flexible display (230, 330, 603).

7. The electronic device of claim 3, further comprising at least one ornamental cover (219, 229, 319, 329) disposed on the first housing (210, 321) or the second housing (220, 322) in a position corresponding to at least the first section,
wherein the first sections (S1) are disposed to directly face the inner wall of the first housing (210, 321) or the inner wall of the second housing (220, 322), and wherein the ornamental cover (219, 229, 319, 329) is configured to hide a gap between any one of the first sections (S1) and the inner wall of the first housing (210, 321) or a gap between another one of the first sections (S1) and the inner wall of the second housing (220, 322).

8. The electronic device of claim 3, further comprising:
at least one ornamental cover (219, 229, 319, 329) disposed on the first housing (210, 321) or the second housing (220, 322) in a position corresponding to at least the first section; and
at least one sound hole (245b, 245c) formed in the first housing (210, 321),
wherein the ornamental cover (219, 229, 319, 329) is disposed to face the sound hole (245b, 245c) through a gap between one of the first sections (S1) and the inner wall of the first housing (210, 321).

9. The electronic device of claim 3, further comprising at least one ornamental cover (219, 229, 319, 329) disposed on the first housing (210, 321) or the second housing (220, 322) in a position corresponding to at least the first section,
wherein the ornamental cover (219, 229, 319, 329) is configured to come in dot contact or line contact with an end of the protection member (206, 306).

10. The electronic device of claim 1, further comprising a hinge cover (360) disposed between the first housing (210, 321) and the second housing (220, 322),
wherein the hinge cover (360) is configured to receive at least a portion of the hinge module (340).

11. The electronic device of claim 10, wherein the protection member (206, 306) is configured to at least partially hide a gap between a portion of the edge of the flexible display (230, 330, 603) and the hinge cover (360).

12. The electronic device of claim 10, wherein the hinge cover (360) further includes cap members (369) disposed on two opposite ends of the hinge cover (360) on the folding axis to be adjacent to the edge of the flexible display (230, 330, 603), and
wherein the protection member (206, 306) is configured to at least partially hide a gap between a portion of the edge of the flexible display (230, 330, 603) and the cap member.

13. The electronic device of claim 1, wherein the protection member (206, 306) is formed to at least partially cover a surface of the flexible display (230, 330, 603) on the edge of the flexible display (230, 330, 603).

14. The electronic device of claim 1, wherein a portion of the edge of the flexible display (230, 330, 603) is disposed to directly face the inner wall of the first housing (210, 321) or the inner wall of the second housing (220, 322).

15. The electronic device of claim 14, further comprising a flexible printed circuit board (339) extending from the flexible display (230, 330, 603),
wherein the edge of the flexible display (230, 330, 603) includes first sections (S1) disposed parallel to the folding axis, second sections (S2) disposed to cross the folding axis, and curved sections (S3) connecting the first sections (S1) and the second sections (S2),
wherein the protection member (206, 306) is disposed on at least a portion of the curved section (S3) and the second section, and
wherein the flexible printed circuit board (339) is at least partially disposed between an inner surface of the flexible display (230, 330, 603) and one surface of the second housing (220, 322) through a gap between another one of the first sections (S1) and the inner wall of the second housing (220, 322).

## Patentansprüche

1. Elektronische Vorrichtung, umfassend:
ein erstes Gehäuse (210, 321);
ein zweites Gehäuse (220, 322), das so konfiguriert ist, dass es zwischen einer ersten Position, in der das zweite Gehäuse (220, 322) so angeordnet ist, dass es dem ersten Gehäuse (210, 321) zugewandt ist, und einer zweiten Position, die um einen bestimmten Winkel von der ersten Position aufgeklappt ist, schwenkt;
mindestens ein Scharniermodul (340), das eine Klappachse bereitstellt und zwischen dem ersten Gehäuse (210, 321) und das zweite Gehäuse (220, 322) angeordnet ist, um das erste Gehäuse (210, 321) und das zweite Gehäuse (220, 322) schwenkbar zu koppeln;
eine flexible Anzeige (230, 330, 603), die einen ersten Bereich (231a), der an dem ersten Gehäuse (210, 321) angeordnet ist, einen zweiten Bereich (231b), der an dem zweiten Gehäuse (220, 322) angeordnet ist, und einen Klappbereich, der entsprechend einem Bereich angeordnet ist, der an dem Scharniermodul (340) dazu angeordnet ist, den ersten Bereich (231a) und den zweiten Bereich (231b) zu verbinden, beinhaltet; und
ein Schutzelement (206, 306), das an mindestens einem Abschnitt eines Rands der flexiblen Anzeige (230, 330, 603) angeordnet ist,
**dadurch gekennzeichnet, dass**:
das Schutzelement (206, 306) an mindestens einem Abschnitt einer gekrümmten Sektion des Rands der flexiblen Anzeige (230, 330, 603) ausgebildet ist und so angeordnet ist, dass es im Wesentlichen eine Innenwand des ersten Gehäuses (210, 321) oder eine Innenwand des zweiten Gehäuses (220, 322) berührt, sodass das Schutzelement (206, 306) so konfiguriert ist, dass es eine Montageposition der Anzeige an dem ersten Gehäuse (210, 321) oder dem zweiten Gehäuse (220, 322) führt.

2. Elektronische Vorrichtung nach Anspruch 1, wobei das Schutzelement (206, 306) einen Dämpfungsvorsprung (361) beinhaltet, der so ausgebildet ist, dass er zu einer Oberfläche von einem von dem ersten Gehäuse (210, 321) und dem zweiten Gehäuse (220, 322) in einem bestimmten Abstand von der Klappachse vorsteht, und
wobei in der ersten Position der Dämpfungsvorsprung (361) so konfiguriert ist, dass er das andere von dem ersten Gehäuse (210, 321) und dem zweiten Gehäuse (220, 322) berührt.

3. Elektronische Vorrichtung nach Anspruch 1, wobei der Rand der flexiblen Anzeige (230, 330, 603) Folgendes beinhaltet:
erste Sektionen (S1), die parallel zu der Klappachse angeordnet sind;
zweite Sektionen (S2), die so angeordnet sind, dass sie die Klappachse kreuzen; und
gekrümmte Sektionen (S3), die die ersten Sektionen (S1) und die zweiten Sektionen (S2) verbinden, und
wobei das Schutzelement (206, 306) ferner an mindestens einem Abschnitt der zweiten Sektion (S2) angeordnet ist.

4. Elektronische Vorrichtung nach Anspruch 3, wobei die ersten Sektionen (S1) so angeordnet sind, dass sie direkt der Innenwand des ersten Gehäuses (210, 321) oder der Innenwand des zweiten Gehäuses (220, 322) zugewandt sind.

5. Elektronische Vorrichtung nach Anspruch 3, ferner umfassend mindestens ein Schallloch (245b, 245c), das in dem ersten Gehäuse (210, 321) ausgebildet ist,
wobei die ersten Sektionen (S1) so angeordnet sind, dass sie direkt der Innenwand des ersten Gehäuses (210, 321) oder der Innenwand des zweiten Gehäuses (220, 322) zugewandt sind, und wobei das Schallloch (245b, 245c) durch einen Spalt zwischen einer der ersten Sektionen (S1) und der Innenwand des ersten Gehäuses (210, 321) zu einer Außenseite freiliegt.

6. Elektronische Vorrichtung nach Anspruch 3, ferner umfassend mindestens eine dekorative Abdeckung (219, 229, 319, 329), die an dem ersten Gehäuse (210, 321) oder dem zweiten Gehäuse (220, 322) in einer Position, die mindestens der ersten Sektion entspricht, angeordnet ist,
wobei die dekorative Abdeckung (219, 229, 319, 329) so konfiguriert ist, dass sie einen Abschnitt der flexiblen Anzeige (230, 330, 603) bedeckt.

7. Elektronische Vorrichtung nach Anspruch 3, ferner umfassend mindestens eine dekorative Abdeckung (219, 229, 319, 329), die an dem ersten Gehäuse (210, 321) oder dem zweiten Gehäuse (220, 322) in einer Position, die mindestens der ersten Sektion entspricht, angeordnet ist,
wobei die ersten Sektionen (S1) so angeordnet sind, dass sie direkt der Innenwand des ersten Gehäuses (210, 321) oder der Innenwand des zweiten Gehäuses (220, 322) zugewandt sind, und wobei die dekorative Abdeckung (219, 229, 319, 329) so konfiguriert ist, dass sie einen Spalt zwischen einer von den ersten Sektionen (S1) und der Innenwand des ersten Gehäuses (210, 321) oder einen Spalt zwischen einer anderen von den ersten Sektionen (S1) und der Innenwand des zweiten Gehäuses (220, 322) verbirgt.

8. Elektronische Vorrichtung nach Anspruch 3, ferner umfassend:
mindestens eine dekorative Abdeckung (219, 229, 319, 329), die an dem ersten Gehäuse (210, 321) oder dem zweiten Gehäuse (220, 322) in einer Position, die mindestens der ersten Sektion entspricht, angeordnet ist; und
mindestens ein Schallloch (245b, 245c), das in dem ersten Gehäuse (210, 321) ausgebildet ist,
wobei die dekorative Abdeckung (219, 229, 319, 329) so angeordnet ist, dass sie dem Schallloch (245b, 245c) durch einen Spalt zwischen einer von den ersten Sektionen (S1) und der Innenwand des ersten Gehäuses (210, 321) zugewandt ist.

9. Elektronische Vorrichtung nach Anspruch 3, ferner umfassend mindestens eine dekorative Abdeckung (219, 229, 319, 329), die an dem ersten Gehäuse (210, 321) oder dem zweiten Gehäuse (220, 322) in einer Position, die mindestens der ersten Sektion entspricht, angeordnet ist,
wobei die dekorative Abdeckung (219, 229, 319, 329) so konfiguriert ist, dass sie in Punktkontakt oder Linienkontakt mit einem Ende des Schutzelements (206, 306) kommt.

10. Elektronische Vorrichtung nach Anspruch 1, ferner umfassend eine Scharnierabdeckung (360), die zwischen dem ersten Gehäuse (210, 321) und dem zweiten Gehäuse (220, 322) angeordnet ist, wobei die Scharnierabdeckung (360) so konfiguriert ist, dass sie zumindest einen Abschnitt des Scharniermoduls (340) aufnimmt.

11. Elektronische Vorrichtung nach Anspruch 10, wobei das Schutzelement (206, 306) so konfiguriert ist, dass es einen Spalt zwischen einem Abschnitt des Rands der flexiblen Anzeige (230, 330, 603) und der Scharnierabdeckung (360) zumindest teilweise verbirgt.

12. Elektronische Vorrichtung nach Anspruch 10, wobei die Scharnierabdeckung (360) ferner Kappenelemente (369) umfasst, die an zwei gegenüberliegenden Enden der Scharnierabdeckung (360) auf der Klappachse so angeordnet sind, dass sie an den Rand der flexiblen Anzeige (230, 330, 603) angrenzen, und
wobei das Schutzelement (206, 306) so konfiguriert ist, dass es einen Spalt zwischen einem Abschnitt des Rands der flexiblen Anzeige (230, 330, 603) und dem Kappenelement zumindest teilweise verbirgt.

13. Elektronische Vorrichtung nach Anspruch 1, wobei das Schutzelement (206, 306) so ausgebildet ist, dass es eine Oberfläche der flexiblen Anzeige (230, 330, 603) am Rand der flexiblen Anzeige (230, 330, 603) zumindest teilweise bedeckt.

14. Elektronische Vorrichtung nach Anspruch 1, wobei ein Abschnitt des Rands der flexiblen Anzeige (230, 330, 603) so angeordnet ist, dass er direkt der Innenwand des ersten Gehäuses (210, 321) oder der Innenwand des zweiten Gehäuses (220, 322) zugewandt ist.

15. Elektronische Vorrichtung nach Anspruch 14, ferner umfassend eine flexible Leiterplatte (339), die sich von der flexiblen Anzeige (230, 330, 603) erstreckt,
wobei der Rand der flexiblen Anzeige (230, 330, 603) erste Sektionen (S1), die parallel zu der Klappachse angeordnet sind, zweite Sektionen (S2), die so angeordnet sind, dass sie die Klappachse kreuzen, und gekrümmte Sektionen (S3), die die ersten Sektionen (S1) und die zweiten Sektionen (S2) verbinden, beinhaltet,
wobei das Schutzelement (206, 306) an zumindest einem Abschnitt der gekrümmten Sektion (S3) und der zweiten Sektion angeordnet ist, und
wobei die flexible Leiterplatte (339) zumindest teilweise zwischen einer Innenfläche der flexiblen Anzeige (230, 330, 603) und einer Oberfläche des zweiten Gehäuses (220, 322) durch einen Spalt zwischen einer anderen von den ersten Sektionen (S1) und der Innenwand des zweiten Gehäuses (220, 322) angeordnet ist.

## Revendications

1. Dispositif électronique, comprenant :
un premier boîtier (210, 321) ;
un second boîtier (220, 322) conçu pour pivoter entre une première position dans laquelle le second boîtier (220, 322) est disposé pour faire face au premier boîtier (210, 321) et une seconde position dépliée d'un angle désigné par rapport à la première position ;
au moins un module de charnière (340) fournissant un axe de pliage et disposé entre le premier boîtier (210, 321) et le second boîtier (220, 322) pour coupler de manière pivotante le premier boîtier (210, 321) et le second boîtier (220, 322) ;
un dispositif d'affichage souple (230, 330, 603) comprenant une première zone (231a) disposée sur le premier boîtier (210, 321), une seconde zone (231b) disposée sur le second boîtier (220, 322), et une zone de pliage disposée correspondant à une zone disposée sur le module de charnière (340) pour raccorder la première zone (231a) et la seconde zone (231b) ; et
un élément de protection (206, 306) disposé sur au moins une partie d'un bord du dispositif d'affichage souple (230, 330, 603),
**caractérisé en ce que** :
l'élément de protection (206, 306) est formé sur au moins une partie d'une section incurvée du bord du dispositif d'affichage souple (230, 330, 603) et disposé pour entrer sensiblement en contact avec une paroi interne du premier boîtier (210, 321) ou une paroi interne du second boîtier (220, 322) de sorte que l'élément de protection (206, 306) soit conçu pour guider une position d'assemblage du dispositif d'affichage sur le premier boîtier (210, 321) ou le second boîtier (220, 322).

2. Dispositif électronique de la revendication 1, ledit élément de protection (206, 306) comprenant une saillie d'amortissement (361) formée pour faire saillie vers une surface de l'un du premier boîtier (210, 321) et du second boîtier (220, 322) à une distance désignée de l'axe de pliage, et
dans la première position, ladite saillie d'amortissement (361) étant conçue pour entrer en contact avec l'autre du premier boîtier (210, 321) et du second boîtier (220, 322).

3. Dispositif électronique de la revendication 1, ledit bord du dispositif d'affichage souple (230, 330, 603) comprenant :
des premières sections (S1) disposées parallèles à l'axe de pliage ;
des secondes sections (S2) disposées pour croiser l'axe de pliage ; et
des sections courbes (S3) raccordant les premières sections (S1) et les secondes sections (S2), et ledit élément de protection (206, 306) étant en outre disposé sur au moins une partie de la seconde section (S2).

4. Dispositif électronique de la revendication 3, lesdites premières sections (S1) étant disposées pour faire directement face à la paroi interne du premier boîtier (210, 321) ou à la paroi interne du second boîtier (220, 322).

5. Dispositif électronique de la revendication 3, comprenant en outre au moins un trou sonore (245b, 245c) formé dans le premier boîtier (210, 321),
lesdites premières sections (S1) étant disposées pour faire directement face à la paroi interne du premier boîtier (210, 321) ou à la paroi interne du second boîtier (220, 322), et ledit trou sonore (245b, 245c) étant exposé à un extérieur à travers un espace entre l'une des premières sections (S1) et la paroi interne du premier boîtier (210, 321).

6. Dispositif électronique de la revendication 3, comprenant en outre au moins un couvercle décoratif (219, 229, 319, 329) disposé sur le premier boîtier (210, 321) ou le second boîtier (220, 322) dans une position correspondant à au moins la première section,
ledit couvercle décoratif (219, 229, 319, 329) étant conçu pour recouvrir une partie du dispositif d'affichage souple (230, 330, 603).

7. Dispositif électronique de la revendication 3, comprenant en outre au moins un couvercle décoratif (219, 229, 319, 329) disposé sur le premier boîtier (210, 321) ou le second boîtier (220, 322) dans une position correspondant à au moins la première section,
lesdites premières sections (S1) étant disposées pour faire directement face à la paroi interne du premier boîtier (210, 321) ou à la paroi interne du second boîtier (220, 322), et ledit couvercle décoratif (219, 229, 319, 329) étant conçu pour cacher un espace entre l'une quelconque des premières sections (S1) et la paroi interne du premier boîtier (210, 321) ou un espace entre une autre des premières sections (S1) et la paroi interne du second boîtier (220, 322).

8. Dispositif électronique de la revendication 3, comprenant en outre :
au moins un couvercle décoratif (219, 229, 319, 329) disposé sur le premier boîtier (210, 321) ou le second boîtier (220, 322) dans une position correspondant à au moins la première section ; et
au moins un trou sonore (245b, 245c) formé dans le premier boîtier (210, 321),
ledit couvercle décoratif (219, 229, 319, 329) étant disposé pour faire face au trou sonore (245b, 245c) à travers un espace entre l'une des premières sections (S1) et la paroi interne du premier boîtier (210, 321).

9. Dispositif électronique de la revendication 3, comprenant en outre au moins un couvercle décoratif (219, 229, 319, 329) disposé sur le premier boîtier (210, 321) ou le second boîtier (220, 322) dans une position correspondant à au moins la première section,
ledit couvercle décoratif (219, 229, 319, 329) étant conçu pour venir en contact par points ou en contact linéaire avec une extrémité de l'élément de protection (206, 306).

10. Dispositif électronique de la revendication 1, comprenant en outre un couvercle de charnière (360) disposé entre le premier boîtier (210, 321) et le second boîtier (220, 322),
ledit couvercle de charnière (360) étant conçu pour recevoir au moins une partie du module de charnière (340).

11. Dispositif électronique de la revendication 10, ledit élément de protection (206, 306) étant conçu pour cacher au moins partiellement un espace entre une partie du bord du dispositif d'affichage souple (230, 330, 603) et le couvercle de charnière (360).

12. Dispositif électronique de la revendication 10, ledit couvercle de charnière (360) comprenant en outre des éléments capuchons (369) disposés sur deux extrémités opposées du couvercle de charnière (360) sur l'axe de pliage pour être adjacents au bord du dispositif d'affichage souple (230, 330, 603), et
ledit élément de protection (206, 306) étant conçu pour cacher au moins partiellement un espace entre une partie du bord du dispositif d'affichage souple (230, 330, 603) et l'élément capuchon.

13. Dispositif électronique de la revendication 1, ledit élément de protection (206, 306) étant formé pour recouvrir au moins partiellement une surface du dispositif d'affichage souple (230, 330, 603) sur le bord du dispositif d'affichage souple (230, 330, 603).

14. Dispositif électronique de la revendication 1, une partie du bord du dispositif d'affichage souple (230, 330, 603) étant disposée pour faire directement face à la paroi interne du premier boîtier (210, 321) ou à la paroi interne du second boîtier (220, 322).

15. Dispositif électronique de la revendication 14, comprenant en outre une carte de circuit imprimé souple (339) s'étendant à partir du dispositif d'affichage souple (230, 330, 603),
ledit bord du dispositif d'affichage souple (230, 330, 603) comprenant des premières sections (S1) disposées parallèles à l'axe de pliage, des secondes sections (S2) disposées pour croiser l'axe de pliage, et des sections courbes (S3) raccordant les premières sections (S1) et les secondes sections (S2),
ledit élément de protection (206, 306) étant disposé sur au moins une partie de la section incurvée (S3) et de la seconde section, et
ladite carte de circuit imprimé souple (339) étant au moins partiellement disposée entre une surface interne du dispositif d'affichage souple (230, 330, 603) et une surface du second boîtier (220, 322) à travers un espace entre une autre des premières sections (S1) et la paroi interne du second boîtier (220, 322).
